# EUROPEAN PATENT APPLICATION

(11) **EP 4 745 769 A1**
(43) Date of publication of application: **20.05.2026**
(21) Application number: 24884041.5
(22) Date of filing: 19.07.2024
(51) Int. Cl.: G06F 9/48

(54) **SERVICE PUSHING METHOD, ELECTRONIC DEVICE, AND READABLE STORAGE MEDIUM**

(30) Priority: 30.10.2023 CN 202311428073
(71) Applicant: Honor Device Co., Ltd., Shenzhen, Guangdong 518040 (CN)
(72) Inventor: QUE, Longkai, Shenzhen, Guangdong 518040 (CN)
(74) Representative: Henselmann, Alexander Gerhard
(86) International application number: PCT/CN2024/106288
(87) International publication number: WO 2025/092033

(57) **Abstract**

This application discloses a service push method, an electronic device, and a readable storage medium, and pertains to the field of terminal technologies. The method includes: obtaining parameter information of auxiliary services supported by an electronic device, where parameter information of an auxiliary service includes an application list and scenario trigger information, and the application list includes application information of an application that is supported by the auxiliary service and that is installed on the electronic device; querying a scenario detection capability supported by the electronic device; and subscribing to a target scenario fence based on the parameter information of the auxiliary services and the scenario detection capability supported by the electronic device. In this way, the parameter information of the auxiliary services and the scenario detection capability supported by the electronic device are merged, to determine an auxiliary service that is finally allowed to be provided by the electronic device, and a corresponding scenario fence is subscribed to based on the determined auxiliary service that is allowed to be provided, to accurately push the auxiliary service to a user when it is detected that the scenario fence is triggered.

## Description

This application claims priority to Chinese Patent Application No. 202311428073.6, filed with the China National Intellectual Property Administration on October 30, 2023 and entitled "SERVICE PUSH METHOD, ELECTRONIC DEVICE, AND READABLE STORAGE MEDIUM", which is incorporated herein by reference in its entirety.

### TECHNICAL FIELD

This application relates to the field of terminal technologies, and in particular, to a service push method, an electronic device, and a readable storage medium.

### BACKGROUND

Multimodal human-computer interaction means that a user interacts with an electronic device through a plurality of channels such as a sound, a body language, an information carrier (text, a picture, audio, and a video), and an environment, to fully simulate an interaction manner between users. In a multimodal human-computer interaction scenario, a plurality of applications and a plurality of auxiliary services are usually involved. When the electronic device is in different scenarios, how to accurately push an auxiliary service to the user becomes a hot topic in current research.

### SUMMARY

This application provides a service push method, an electronic device, and a readable storage medium, to resolve a problem of how to accurately push an auxiliary service to a user. The technical solutions are as follows:

According to a first aspect, a service push method is provided and is applied to an electronic device. The method includes:
obtaining parameter information of auxiliary services supported by the electronic device, where parameter information of an auxiliary service includes an application list and scenario trigger information, and the application list includes application information of an application that is supported by the auxiliary service and that is installed on the electronic device; querying a scenario detection capability supported by the electronic device; and subscribing to a target scenario fence based on the parameter information of the auxiliary services and the scenario detection capability supported by the electronic device, so that the electronic device pushes a corresponding auxiliary service when detecting, based on the target scenario fence, that an auxiliary service trigger condition is met.

The target scenario fence includes at least one scenario fence, and different scenario fences in the at least one scenario fence correspond to different auxiliary services.

In this way, barrier scenarios supported by the auxiliary services and the scenario detection capability of the electronic device are merged, so that the electronic device has a finally subscribed barrier scenario related to an auxiliary service. Therefore, it can be ensured that when the subscribed barrier scenario is triggered, the electronic device can accurately push the corresponding auxiliary service based on a scenario fence.

In an example of this application, specific implementation of obtaining the parameter information of the auxiliary services supported by the electronic device may include: querying, for any one of the auxiliary services, an application package including a specified identifier from application packages of all applications installed on the electronic device, where the any auxiliary service supports an application corresponding to the application package including the specified identifier; adding application information corresponding to each of all found application packages to an application list corresponding to the any auxiliary service; obtaining scenario trigger information of the any auxiliary service, where different scenario trigger information corresponds to different specified identifiers; and obtaining the application list obtained after addition and the scenario trigger information of the any auxiliary service as parameter information of the any auxiliary service.

In this way, for the any one of the auxiliary services, the parameter information of the auxiliary service is determined by querying the application list and the scenario trigger information supported by the auxiliary service, so that a scenario fence is subsequently subscribed to based on the application list and the scenario trigger information supported by the auxiliary service. In this way, when a scenario fence is subscribed to for the auxiliary service, and a barrier scenario is triggered in a period in which an application in the application list is running in the foreground, the electronic device can successfully push the auxiliary service.

In an example of this application, before querying the application package including the specified identifier from the application packages of all the applications installed on the electronic device, the electronic device may further query whether a hardware condition and/or a software condition related to functional implementation of the any auxiliary service meet/meets a preset service support condition; and when the hardware condition and/or the software condition related to the functional implementation of the any auxiliary service meet/meets the preset service support condition, perform the operation of querying an application package including a specified identifier from application packages of all applications installed on the electronic device.

In this way, support statuses of the auxiliary services in the electronic device are queried, to avoid a case in which when the electronic device does not support a specific auxiliary service, the auxiliary service cannot be used after being pushed.

In an example of this application, specific implementation of subscribing to the target scenario fence based on the parameter information of the auxiliary services and the scenario detection capability supported by the electronic device may include: for the any one of the auxiliary services, determining whether the scenario detection capability of the electronic device includes a scenario detection capability indicated by the scenario trigger information in the parameter information of the any auxiliary service; and subscribing to a scenario fence of the any auxiliary service when the scenario detection capability of the electronic device includes the scenario detection capability indicated by the scenario trigger information in the parameter information of the any auxiliary service.

In this way, in a process of subscribing to each auxiliary service, the scenario detection capability supported by the electronic device is queried, so that the electronic device can detect each subscribed barrier scenario, to effectively push an auxiliary service. This avoids a case in which a barrier scenario that cannot be detected by the electronic device is subscribed to, and consequently a corresponding auxiliary service cannot be successfully pushed after the subscription.

In an example of this application, the scenario fence of the any auxiliary service includes a mapping relationship between the scenario trigger information and the application list of the any auxiliary service. In this way, a mapping relationship between an application list and scenario trigger information is established, so that when detecting that a barrier scenario is triggered, the electronic device determines, based on the mapping relationship, whether the application list includes an application corresponding to the barrier scenario, to determine whether to push the auxiliary service.

In an example of this application, before subscribing to the target scenario fence based on the parameter information of the auxiliary services and the scenario detection capability supported by the electronic device, the electronic device may further detect a screen-on/off state and a power saving mode status of the electronic device; and when the electronic device is in the screen-on state and a power saving mode of the electronic device is in a disabled state, perform the operation of subscribing to a target scenario fence based on the parameter information of the auxiliary services and the scenario detection capability supported by the electronic device.

In this way, a screen status and the power saving mode status of the electronic device are detected, so that the electronic device subscribes to the scenario fence when a screen is on and the power saving mode is not turned on, to avoid additional power consumption of the electronic device that is caused by subscribing to the scenario fence when the screen is off and the power saving mode is turned on.

In an example of this application, after the target scenario fence is subscribed to based on the parameter information of the auxiliary services and the scenario detection capability supported by the electronic device, if the electronic device enters the screen-off state or the power saving mode of the electronic device is in an enabled state, the subscription to the target scenario fence is canceled. In this way, because specific power needs to be consumed for scenario detection, the subscription to the target scenario fence is canceled when the screen is off or the power saving mode is turned on, to reduce running power consumption of the electronic device.

In an example of this application, after the target scenario fence is subscribed to based on the parameter information of the auxiliary services and the scenario detection capability supported by the electronic device, if an application change event occurs in the electronic device, it is queried whether the auxiliary services include a target auxiliary service, where the target auxiliary service is an auxiliary service of a target application that supports a change, and the application change event is an event of installing an application or uninstalling an application. If the auxiliary services include the target auxiliary service and a scenario fence corresponding to the target auxiliary service is subscribed to, the scenario fence corresponding to the target auxiliary service is updated, so that application information of the target application is removed from or added to an updated scenario fence.

In this way, when the application change event is detected, it is queried whether a subscribed auxiliary service supports an application that experiences the application change event. If one or some subscribed auxiliary services support the application, a scenario fence corresponding to this or these auxiliary services is updated, so that after a barrier scenario is triggered during subsequent running of the application, the electronic device can successfully and accurately push the auxiliary service.

In an example of this application, the electronic device includes a multimode decision engine, a decision middle platform, and an application package manager service, and the multimode decision engine includes auxiliary service agents corresponding to the auxiliary services. In this case, the multimode decision engine respectively obtains the parameter information of the auxiliary services from the application package manager service through the auxiliary service agents, and the multimode decision engine queries the scenario detection capability supported by the electronic device from the decision middle platform. The multimode decision engine subscribes to the target scenario fence from the decision middle platform based on the parameter information of the auxiliary services and the scenario detection capability supported by the electronic device.

The multimode decision engine is added to the electronic device. The multimode decision engine queries the parameter information of the auxiliary services through the auxiliary service agents, queries a scenario detection capability supported by the decision middle platform, and merges the parameter information of the auxiliary services and the scenario detection capability supported by the decision middle platform, to subscribe to a scenario fence of an auxiliary service that is finally allowed to be pushed, so that the auxiliary service can be subsequently successfully pushed.

In an example of this application, the target scenario fence includes at least one scenario fence, and different scenario fences correspond to different auxiliary services. After the target scenario fence is subscribed to based on the parameter information of the auxiliary services and the scenario detection capability supported by the electronic device, in response to a scenario in which the electronic device is located being a barrier scenario indicated by scenario trigger information in a first scenario fence, it is queried whether an application list in the first scenario fence includes an application that is running in the foreground, where the first scenario fence is a scenario fence in the target scenario fence. If the application list in the first scenario fence includes an application that is running in the foreground, it is determined that the first scenario fence is triggered. In this case, an auxiliary service corresponding to the first scenario fence is pushed, so that a user performs multimodal human-computer interaction with the electronic device by using the auxiliary service corresponding to the first scenario fence, to improve convenience of operating the electronic device by the user.

According to a second aspect, an electronic device is provided and includes a memory, a processor, and a computer program that is stored in the memory and that is capable of running on the processor. When the processor executes the computer program, the service push method according to the first aspect is implemented.

According to a third aspect, a computer-readable storage medium is provided. The computer-readable storage medium stores instructions, and when the instructions are run on a computer, the computer is enabled to perform the service push method according to the first aspect.

According to a fourth aspect, a computer program product including instructions is provided. When the instructions are run on a computer, the computer is enabled to perform the service push method according to the first aspect.

Technical effects achieved in the second aspect, the third aspect, and the fourth aspect are similar to technical effects achieved by corresponding technical means in the first aspect, and are not described herein again.

### BRIEF DESCRIPTION OF DRAWINGS

FIG. 1 is a schematic diagram of an application scenario according to an example embodiment;
FIG. 2A, FIG. 2B, FIG. 2C, FIG. 2D, FIG. 2E, and FIG. 2F are a schematic diagram of an application scenario according to another example embodiment;
FIG. 3A, FIG. 3B, and FIG. 3C are a schematic diagram of an application scenario according to another example embodiment;
FIG. 4A, FIG. 4B, and FIG. 4C are a schematic diagram of an application scenario according to another example embodiment;
FIG. 5A and FIG. 5B are a schematic diagram of an application scenario according to another example embodiment;
FIG. 6A, FIG. 6B, and FIG. 6C are a schematic diagram of an application scenario according to another example embodiment;
FIG. 7A, FIG. 7B, and FIG. 7C are a schematic diagram of an application scenario according to another example embodiment;
FIG. 8 is a schematic diagram of a software system of an electronic device according to an example embodiment;
FIG. 9A, FIG. 9B, and FIG. 9C are a schematic flowchart of a method for pushing an auxiliary service according to an example embodiment;
FIG. 10A and FIG. 10B are a schematic flowchart of determining whether a scenario subscription condition is met according to an example embodiment;
FIG. 11A, FIG. 11B, and FIG. 11C are a schematic flowchart of refreshing a scenario fence according to an example embodiment; and
FIG. 12 is a schematic diagram of a structure of an electronic device according to an example embodiment.

### DESCRIPTION OF EMBODIMENTS

To make the objectives, technical solutions, and advantages of this application clearer, implementations of this application are further described in detail below with reference to the accompanying drawings.

It should be understood that "a plurality of" in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, for ease of describing the technical solutions in this application clearly, the terms such as "first" and "second" are used to distinguish between same or similar items with basically same functions and roles. A person skilled in the art may understand that the terms such as "first" and "second" do not limit a quantity or an execution sequence, and the terms such as "first" and "second" do not indicate a definite difference.

Reference to "one embodiment", "some embodiments", or the like described in the specification of this application means that a specific feature, structure, or characteristic described with reference to the embodiment is included in one or more embodiments of this application. Therefore, statements such as "in an embodiment", "in some embodiments", "in some other embodiments", and "in some additional embodiments" appearing at different locations in this specification do not necessarily refer to a same embodiment, but mean "one or more but not all embodiments", unless otherwise specifically emphasized in another manner. The terms "include", "comprise", "have", and variants thereof mean "including but not limited to", unless otherwise specifically emphasized in another manner.

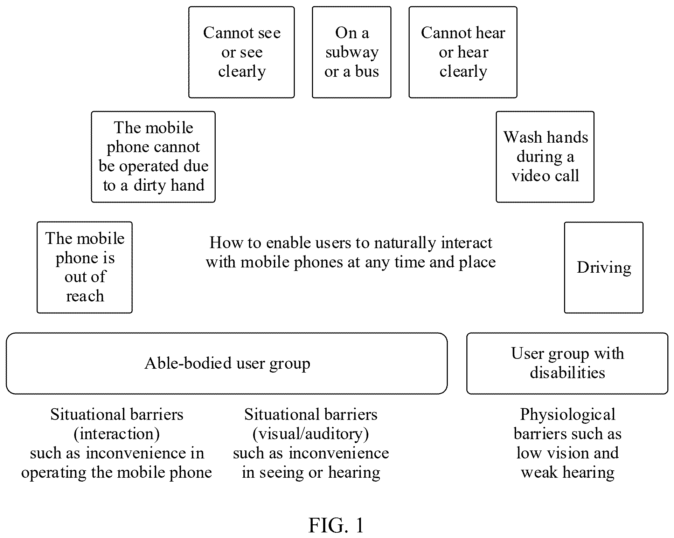

In some scenarios, there may be barriers when users use electronic devices. With reference to FIG. 1, for an able-bodied user group, there may be situational barriers such as interaction, visual, and auditory barriers, for example, inconvenience in operating a mobile phone and inconvenience in seeing or hearing; and for a user group with disabilities, there may be physiological barriers such as low vision and weak hearing. For example, in a process of using a mobile phone by a user, there may be a scenario in which the mobile phone is out of reach, the mobile phone cannot be operated due to a dirty hand, the mobile phone cannot be seen or seen clearly, the user is on a subway or a bus, the mobile phone cannot be heard or heard clearly, hands are washed during a video call, or the mobile phone cannot be operated during driving. These scenarios may usually be referred to as barrier scenarios. The electronic device provides a multimodal human-computer interaction capability for the barrier scenarios, so that the user can still smoothly use the electronic device in these barrier scenarios.

Multimodal human-computer interaction usually involves a plurality of applications and a plurality of auxiliary services. In an example of this application, the plurality of applications include but are not limited to a video application, an audio application, a social application, and an alarm clock application, and the plurality of auxiliary services include but are not limited to Visual & Voice Interaction, Flexible Commands, AI (artificial intelligence, artificial intelligence) Subtitles, and Air Gestures. Visual & Voice Interaction means that the user may control, by using a voice, the electronic device to perform a corresponding operation, for example, control an in-vehicle infotainment device to play music. Flexible Commands means that after an alarm clock of the electronic device is triggered, the user may control the alarm clock by using a voice, AI Subtitles can help the user translate and display video content in real time. Air Gestures enables the user to make a gesture in the air without touching a screen, a keyboard, or a touchpad, to trigger the electronic device to perform operations such as video fast forward, rewind, and pause.

In the barrier scenario, the user may need the electronic device to accurately push an auxiliary service, so that the user can conveniently and smoothly operate the electronic device. Therefore, the embodiments of this application provide a service push method, to accurately push an auxiliary service to a user based on a scenario in which an electronic device is located.

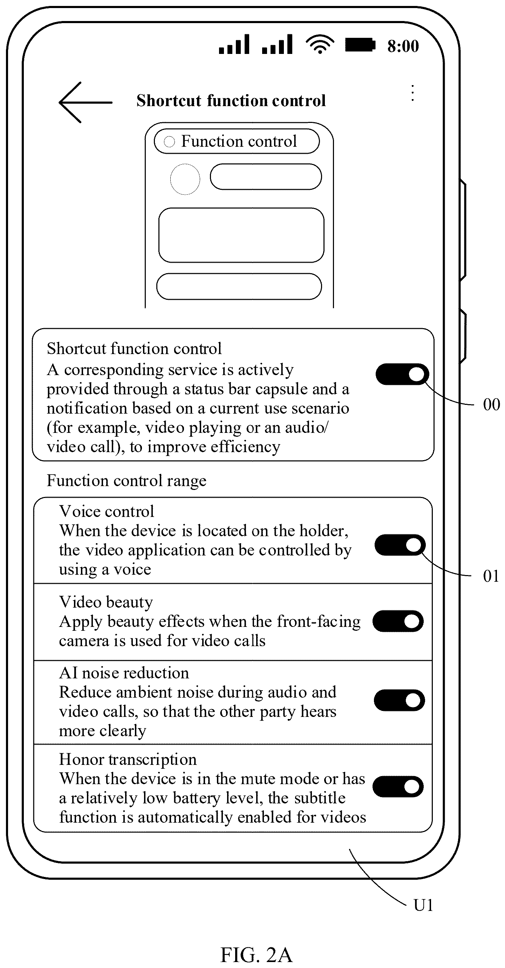

In an example, a possible application scenario in the embodiments of this application is described by using an example in which a "Visual & Voice Interaction" auxiliary function is pushed. As an example instead of a limitation, an entry for enabling or disabling the "Visual & Voice Interaction" auxiliary function is provided in a mobile phone, and the user may control, through the entry, the "Visual & Voice Interaction" auxiliary function to be enabled or disabled. For example, the mobile phone provides the entry in a shortcut function control item in a Settings application. With reference to FIG. 2A, FIG. 2A is a schematic diagram of a shortcut function control interface according to an example embodiment. The shortcut function control interface U1 provides a master switch 00 for shortcut function control and a voice control switch 01. When the user needs the mobile phone to actively push the "Visual & Voice Interaction" auxiliary function in some scenarios, the master switch 00 for shortcut function control and the voice control switch 01 may be enabled, to enable the entry. Correspondingly, the mobile phone enables the "Visual & Voice Interaction" auxiliary function.

It should be noted that the entry provided above is merely an example. In another example, the mobile phone may further provide another entry related to enabling or disabling of the "Visual & Voice Interaction" auxiliary function. For example, the mobile phone may further provide the another entry in AI Voice in the Settings application. This is not limited in embodiments of this application.

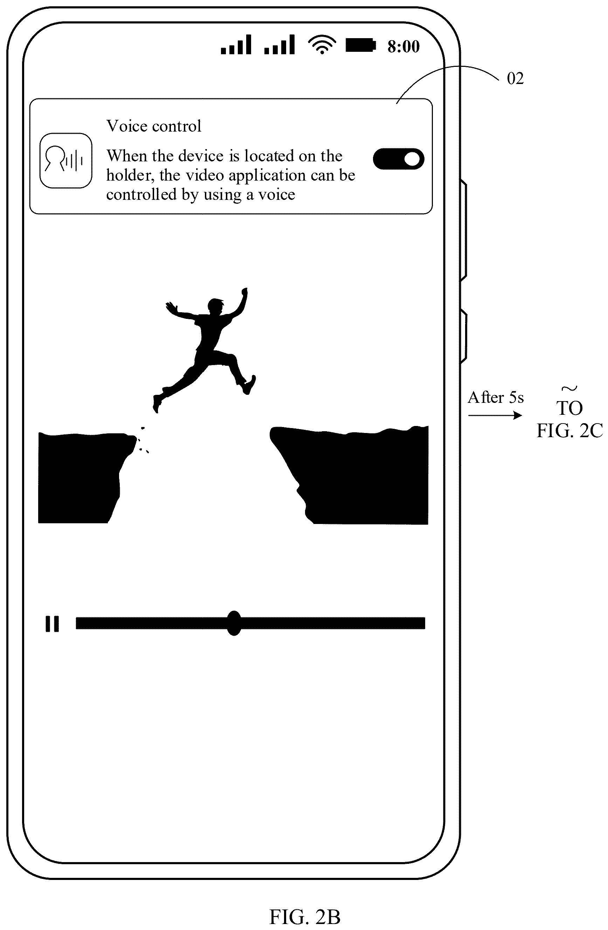

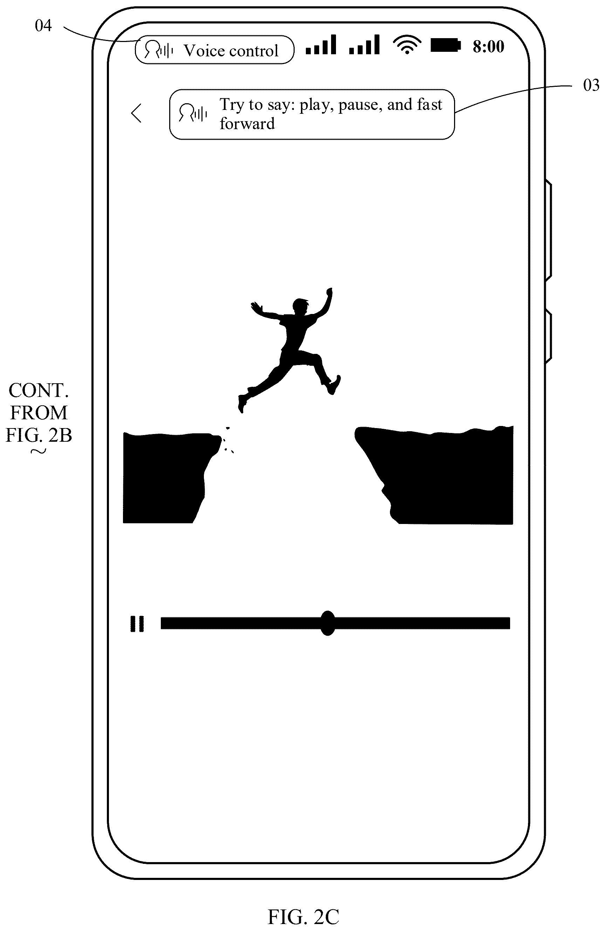

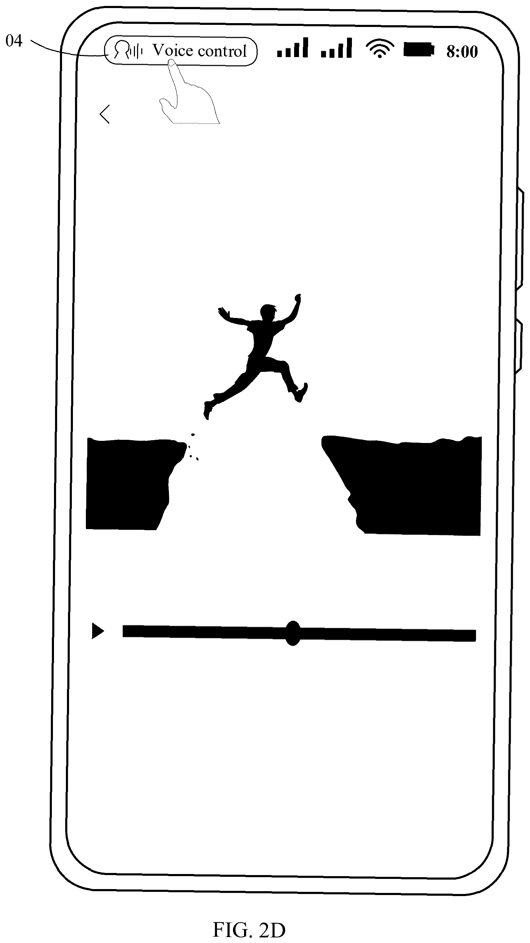

When the "Visual & Voice Interaction" auxiliary function is enabled, in some scenarios, the mobile phone actively pushes the "Visual & Voice Interaction" auxiliary function. For example, in a possible application scenario, the mobile phone plays a video through a video application, and the user places the mobile phone that is playing the video on a holder. With reference to FIG. 2B, after specific duration (for example, 10 seconds), the mobile phone automatically displays a push window 02 on a screen. The push window 02 mainly includes a service type of an auxiliary service pushed by the mobile phone, service function description information, and a service control switch. As shown in FIG. 2B, the service type is "voice control", the service function description information is "When the device is located on the holder, the video application can be controlled by using a voice", and the service control switch is in an enabled state by default. Then, after specific duration (for example, 5 seconds), if the user does not operate the mobile phone, with reference to FIG. 2C, the mobile phone displays a status bar capsule 03 and no longer displays the push window 02. The status bar capsule 03 includes prompt information for prompting the user how to operate. For example, the prompt information is "Try to say: play, pause, and fast forward". The mobile phone may broadcast the prompt information by using a voice. In this way, the user may control, by using a voice, the video being played by the mobile phone. For example, when the user says "pause", with reference to FIG. 2D, the mobile phone pauses the video being played. In this way, in a scenario in which when the mobile phone is playing a video and the user takes hands off the mobile phone for preset duration (for example, 10 seconds), the mobile phone automatically pushes the "Visual & Voice Interaction" auxiliary function to the user, so that the user can control, by using a voice without operating the mobile phone, the video being played by the mobile phone, thereby improving user experience.

With reference to FIG. 2C, when displaying the status bar capsule 03, the mobile phone may further display a status bar capsule 04 (displayed in a highlighted state) on the top of the screen, to indicate that currently the video being played may be controlled by using a voice. With reference to FIG. 2D, in a process in which the user controls, by using a voice, the video being played, the status bar capsule 04 continues to be displayed on the top of the mobile phone, so that the user can learn that currently the video being played may be continuously controlled by using a voice.

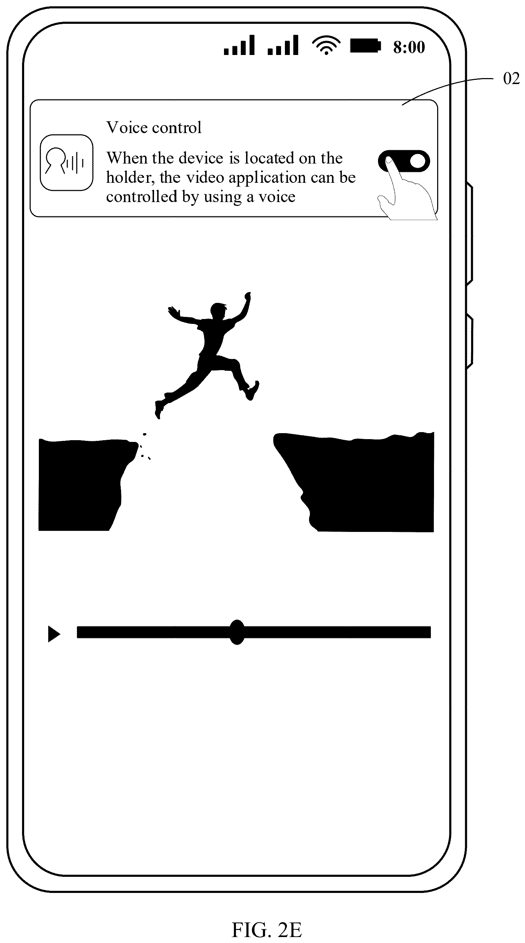

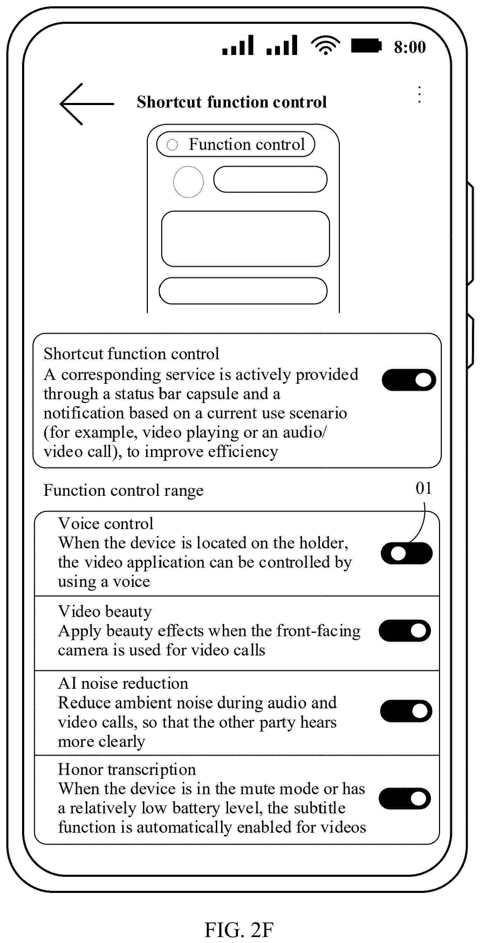

In an example of this application, with reference to FIG. 2D, after the mobile phone displays the status bar capsule 04 on the top of the screen, if the user wants to disable the function of controlling a video by using a voice, the status bar capsule 04 may be tapped. With reference to FIG. 2E, in response to a trigger operation performed by the user on the status bar capsule 04, the mobile phone re-displays the push window 02. Then, the user may trigger the service control switch in the push window 02 to a disabled state. In response to the trigger operation performed by the user on the service control switch, the mobile phone disables the "Visual & Voice Interaction" auxiliary function. In this case, with reference to FIG. 2F, the voice control switch 01 in the shortcut function control interface U1 is also switched to the disabled state. In this way, a case in which when the user does not need to control a video by using a voice, the "Visual & Voice Interaction" auxiliary function needs to be disabled from the entry in the shortcut function control interface U1 is avoided, thereby improving convenience of a user operation.

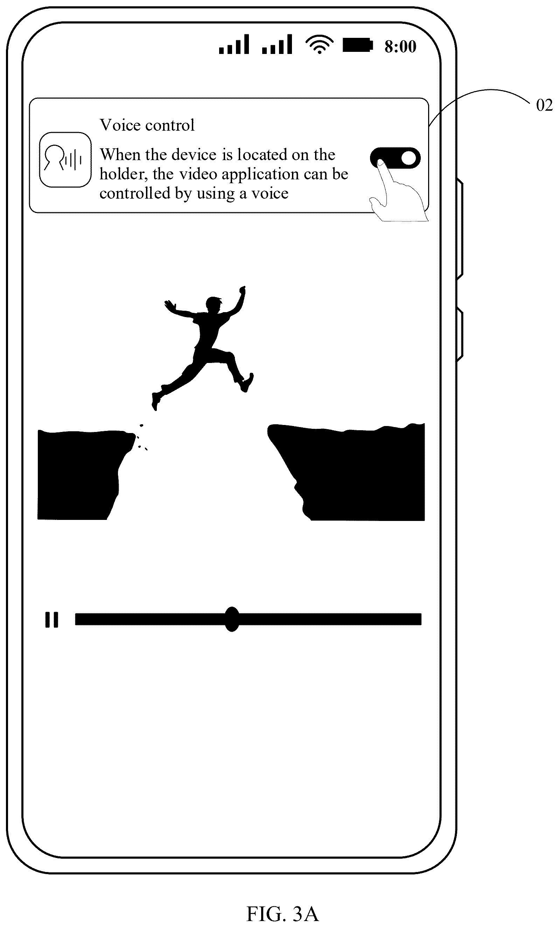

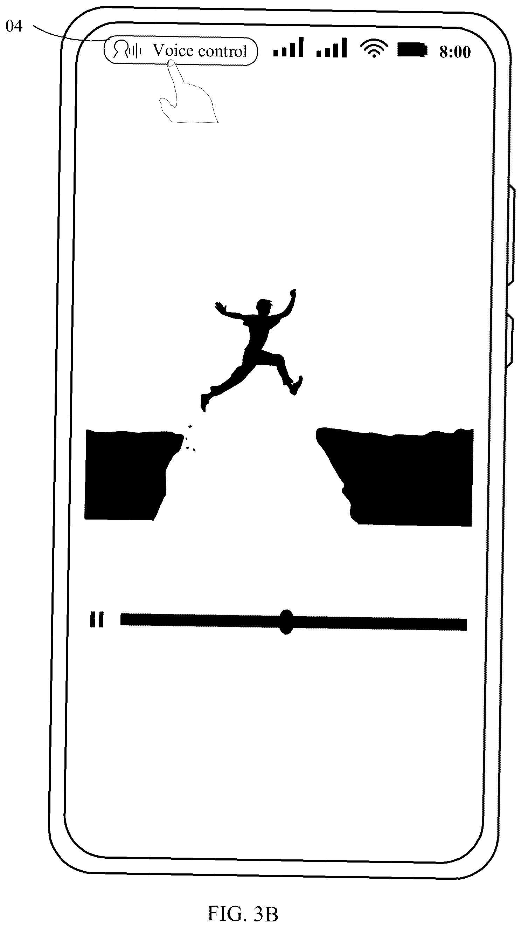

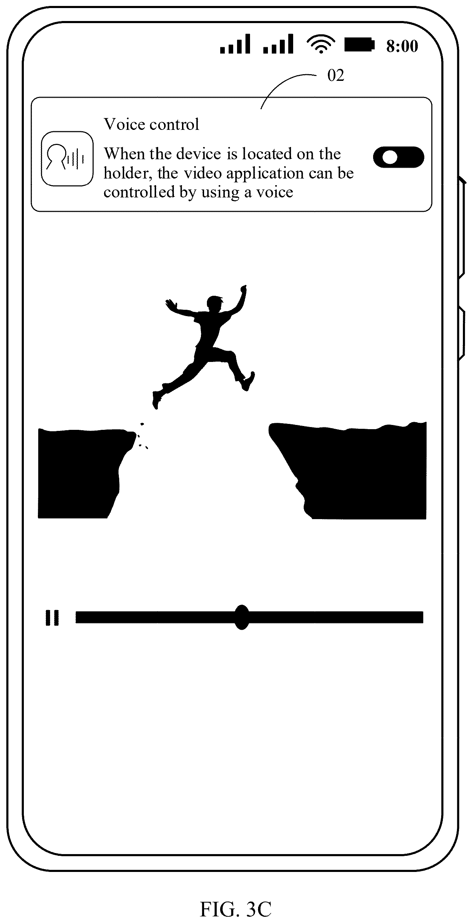

With reference to FIG. 3A, when the mobile phone displays the push window 02, if the user disables the service control switch, with reference to FIG. 3B, the mobile phone does not display the status bar capsule 03 shown in FIG. 2C, and displays only the status bar capsule 04 on the top of the screen. In this case, the status bar capsule 04 is displayed in a grayscale state. In this way, when the user needs to enable the "Visual & Voice Interaction" auxiliary service again, the status bar capsule 04 may be tapped. In response to a trigger operation performed by the user on the status bar capsule 04, the mobile phone displays a push window 02 shown in FIG. 3C. In this case, the service control switch is in the disabled state. In this way, the user may trigger the service control switch to the enabled state in the push window 02, so that the mobile phone launches the "Visual & Voice Interaction" auxiliary service again.

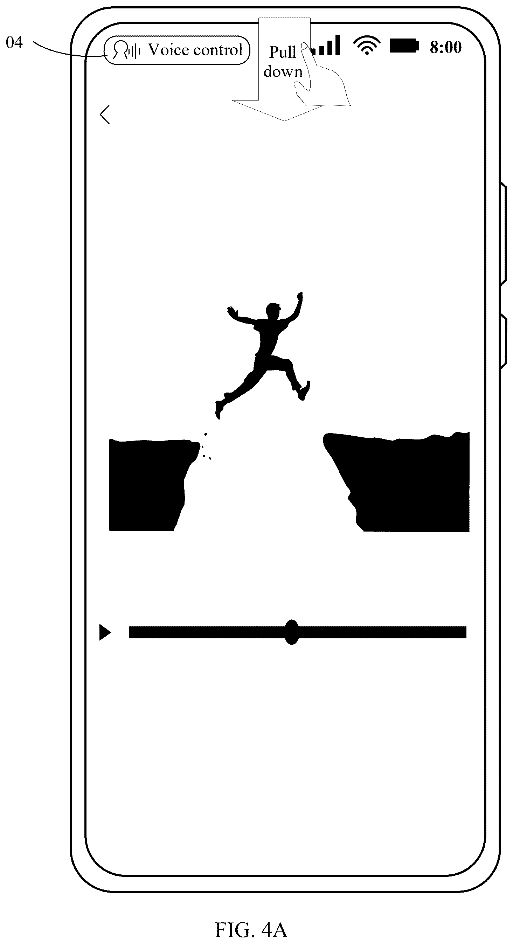

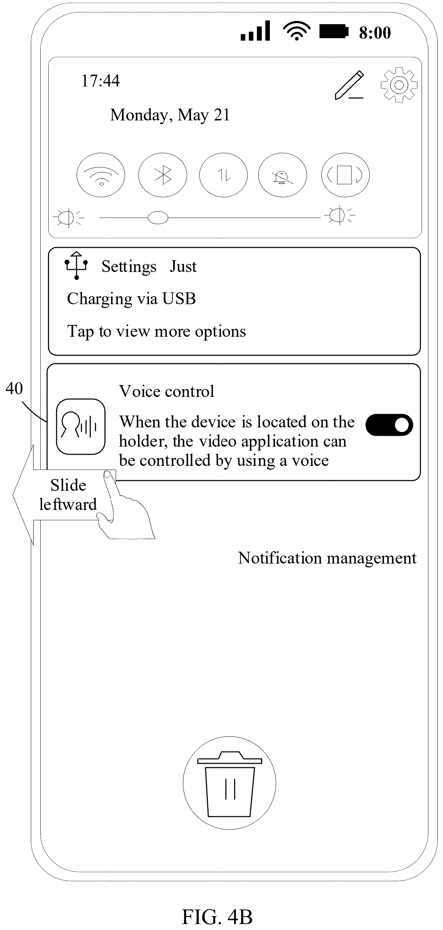

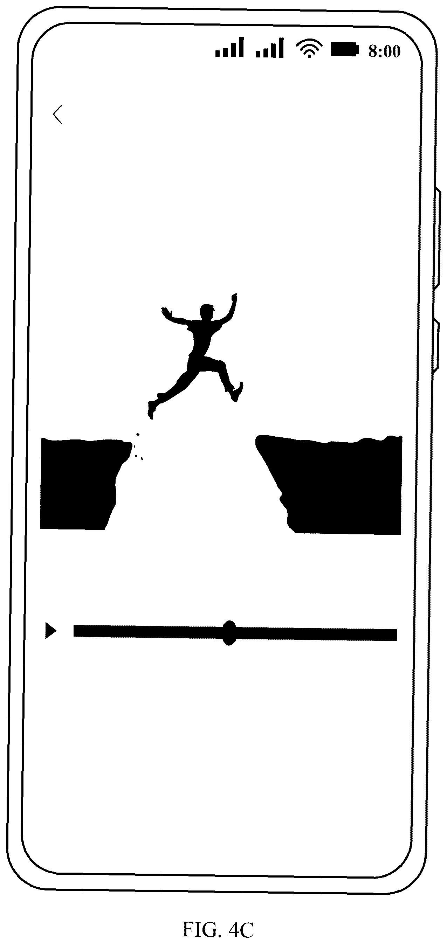

With reference to FIG. 4A, FIG. 4B, and FIG. 4C, after the "Visual & Voice Interaction" auxiliary service is launched, for example, when the mobile phone displays an interface shown in FIG. 4A, if the user pulls down a notification bar, with reference to FIG. 4B, in response to the operation of pulling down the notification bar by the user, the mobile phone displays a push message 40 in a notification center. If the user slides the push message 40 leftward, in response to the leftward sliding operation performed by the user, the mobile phone deletes the push message 40 from the notification bar, and returns to a video playing interface. In this case, the "Visual & Voice Interaction" auxiliary service is disabled. With reference to FIG. 4C, the status bar capsule 04 may no longer be displayed in the video playing interface.

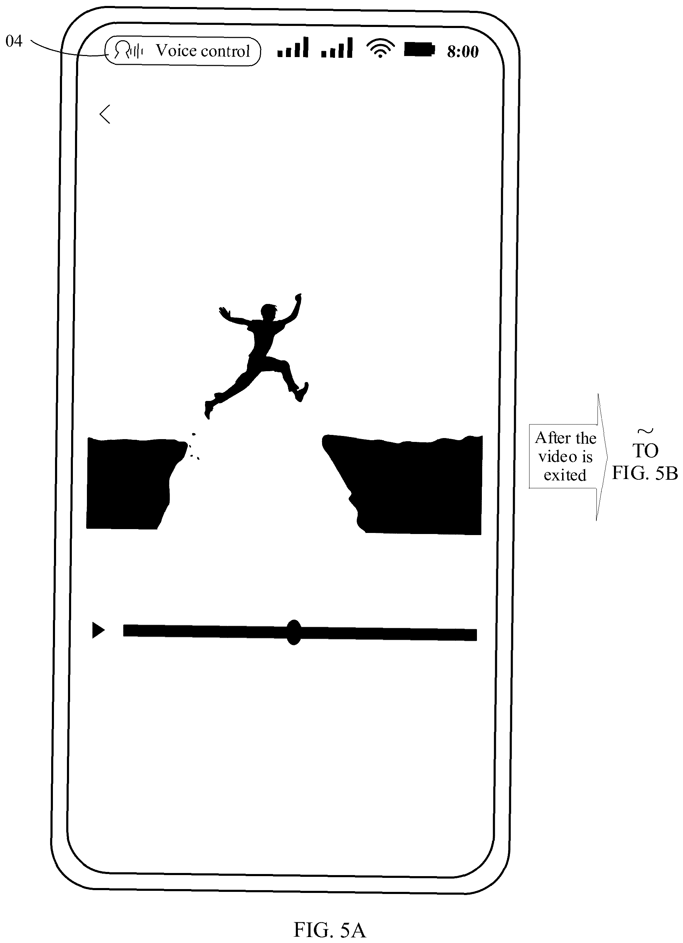

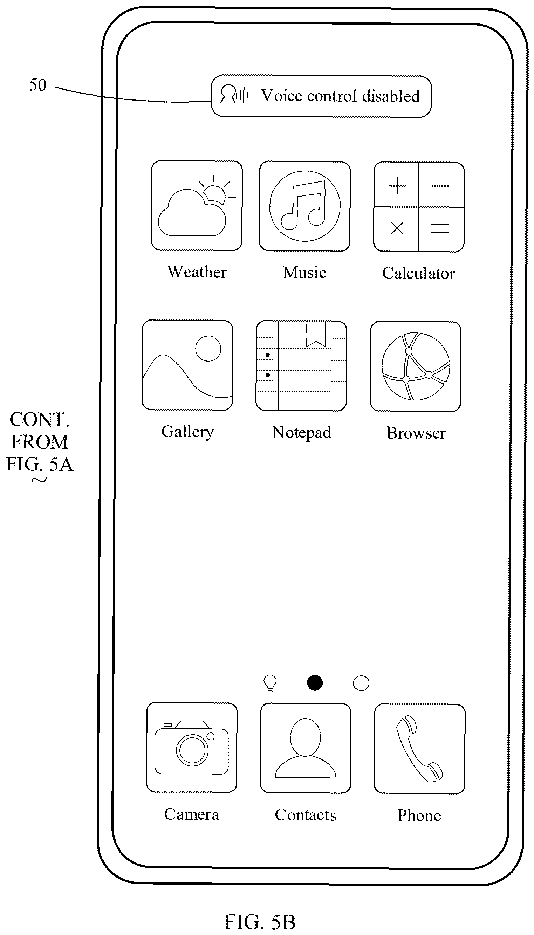

With reference to FIG. 5A and FIG. 5B, after the "Visual & Voice Interaction" auxiliary service is launched, for example, when the mobile phone displays an interface shown in FIG. 5A, if the user triggers the mobile phone to exit the video playing interface, the mobile phone automatically disables the "Visual & Voice Interaction" service. With reference to FIG. 5B, the mobile phone may display exit prompt information 50 in an interface displayed after exit. For example, the exit prompt information 50 is "voice control disabled". As an example instead of a limitation, the mobile phone may further broadcast the exit prompt information by using a voice.

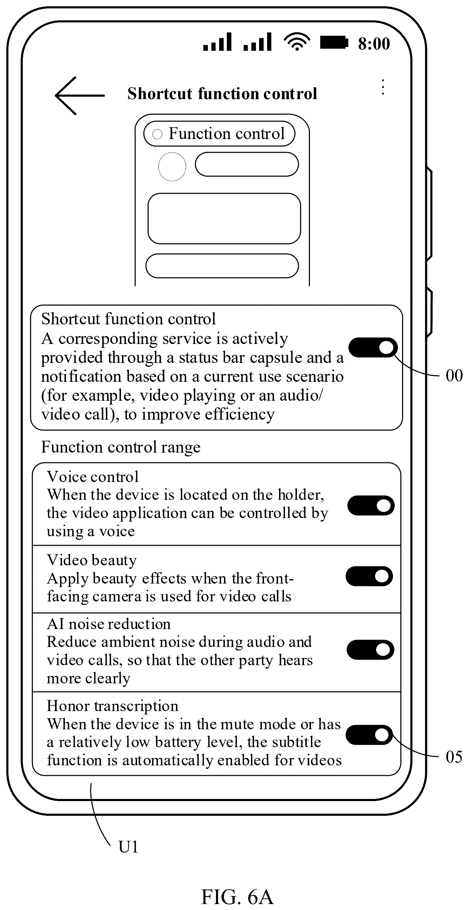

In another example, another possible application scenario in the embodiments of this application is described by using an example in which an "AI Subtitles" auxiliary function is pushed. As an example instead of a limitation, an entry for enabling or disabling the "AI Subtitles" auxiliary function is further provided in a mobile phone, and the user may control, through the entry, the "AI Subtitles" auxiliary function to be enabled or disabled. For example, the mobile phone provides the entry in a shortcut function control item in a Settings application. With reference to FIG. 6A, FIG. 6A is a schematic diagram of a shortcut function control interface according to an example embodiment. The shortcut function control interface U1 provides a master switch 00 for shortcut function control and a translation switch (namely, a switch for Honor transcription) 05. When the user needs the mobile phone to actively push the "AI Subtitles" auxiliary function in some scenarios, the master switch 00 for shortcut function control and the translation switch 05 may be enabled, to enable the entry. Correspondingly, the mobile phone enables the "AI Subtitles" auxiliary function.

Similarly, the entry provided in FIG. 6A is merely an example. In another example, the mobile phone may further provide another entry related to enabling or disabling of the "AI Subtitles" auxiliary function. This is not limited in embodiments of this application.

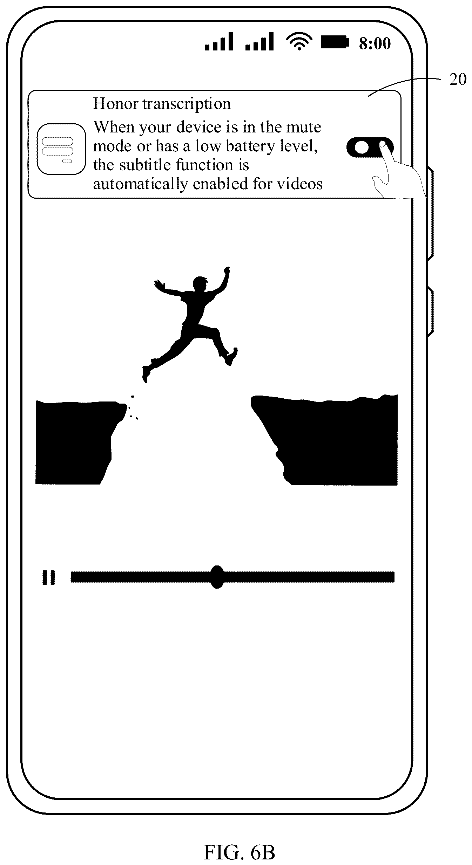

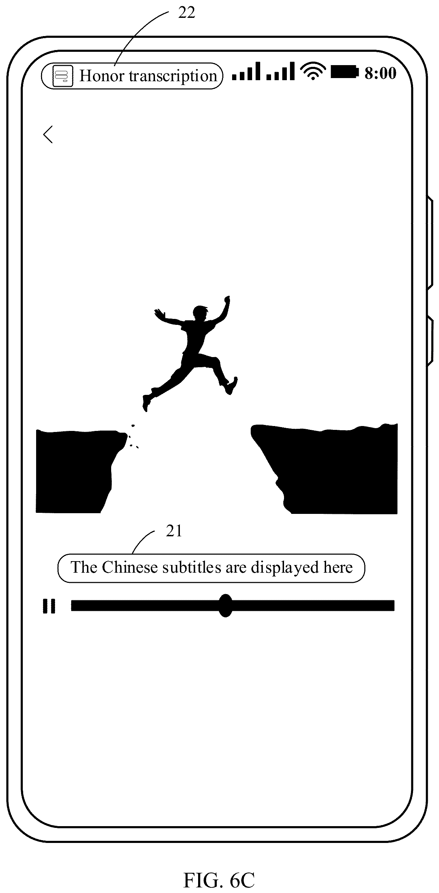

When the "AI Subtitles" auxiliary function is enabled, in some scenarios, the mobile phone actively pushes the "AI Subtitles" auxiliary function. For example, in a possible application scenario, the mobile phone plays a video through a video application. When the mobile phone has a relatively low battery level or the mobile phone is in a mute mode, the mobile phone automatically displays a push window 20 on a screen. The push window 20 mainly includes a service type of an auxiliary service pushed by the mobile phone, service function description information, and a service control switch. As shown in FIG. 6B, the service type is "Honor transcription", namely, an "AI Subtitles" auxiliary service, the service function description information is "When your device is in the mute mode or has a low battery level, the subtitle function is automatically enabled for videos", and the service control switch is in a disabled state by default. If the user needs the mobile phone to perform the "AI Subtitles" auxiliary function, the user may trigger the service control switch to an enabled state. With reference to FIG. 6C, in response to the trigger operation performed by the user, the mobile phone displays a subtitle display box 21 on the screen, and then displays a Chinese subtitle of the currently played video in the subtitle display box 21. In addition, the mobile phone may further display a status bar capsule 22 (in this case, the status bar capsule 22 may be displayed in a highlighted state) on the top of the screen, so that the user can learn that the mobile phone is currently executing the "AI Subtitles" auxiliary service.

In an example of this application, when the mobile phone displays the status bar capsule 22 on the top of the screen, the user may trigger the status bar capsule 22. In response to the trigger operation performed by the user on the status bar capsule 22, the mobile phone displays the push window 20 again. If the user does not need to display the subtitle of the video, the user may trigger the service control switch in the push window 20 to the disabled state. In response to the trigger operation performed by the user, the mobile phone no longer executes the "AI Subtitles" auxiliary service, that is, no longer displays the subtitle display box 21 on the screen, and the push window 20 disappears. In addition, the mobile phone switches the switch for "Honor transcription" in the shortcut function control interface U1 to the disabled state. In this way, a case in which when the user does not need the mobile phone to translate video content, the function needs to be disabled from the entry in the shortcut function control interface U1 is avoided, thereby improving convenience of a user operation.

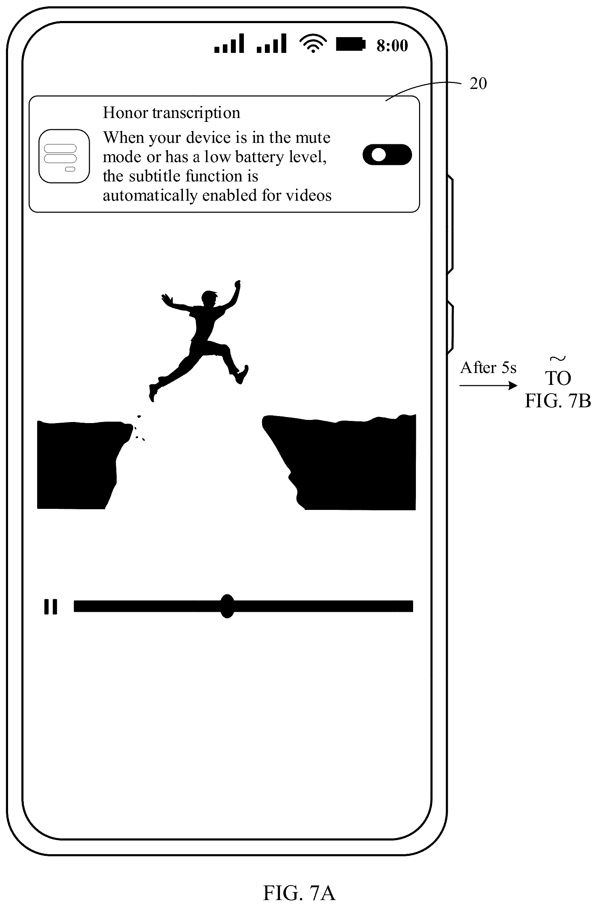

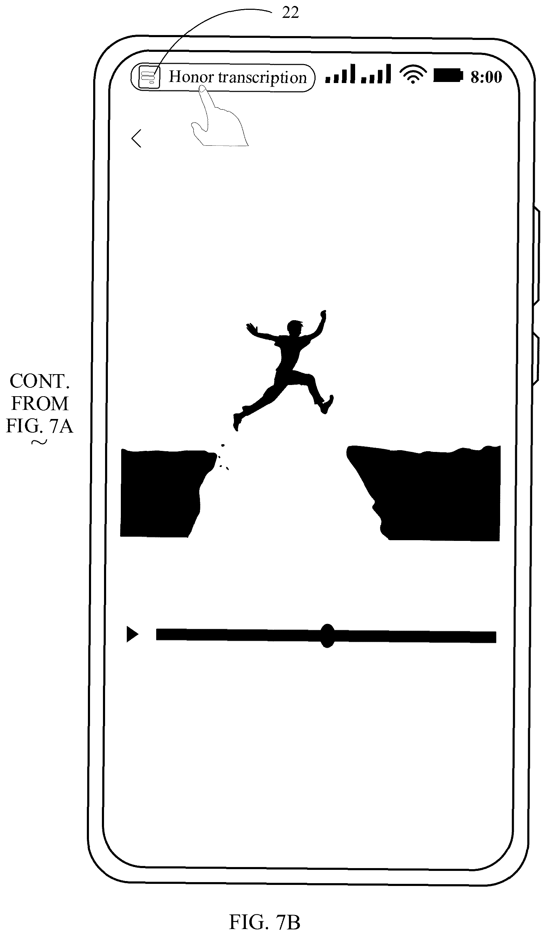

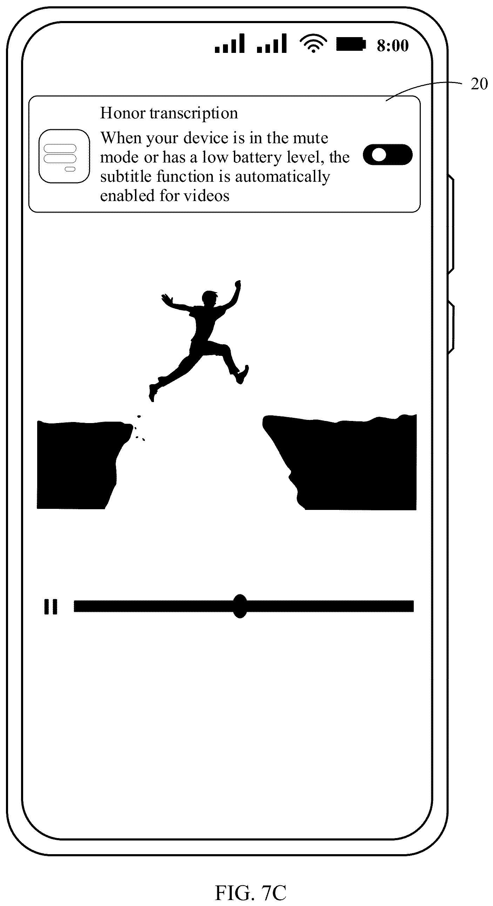

In another possible case, with reference to FIG. 7A, the mobile phone displays a push window 20 on a screen, and the user may not need the mobile phone to translate content played in a video, that is, does not enable the control switch. In this case, with reference to FIG. 7B, after specific duration (for example, 5s), the mobile phone may display a status bar capsule 22 (in this case, the status bar capsule 22 may be displayed in a grayscale state, to be distinguished from FIG. 6C, so as to indicate that the "AI Subtitles" auxiliary service is not enabled currently) on the top of the screen. As shown in FIG. 7B, when the user needs to use the "AI Subtitles" auxiliary service, the status bar capsule 22 may be tapped. With reference to FIG. 7C, in response to the tap operation performed by the user on the status bar capsule 22, the mobile phone displays the push window 20 again, so that the user can enable the service control switch in the push window 20 to trigger the mobile phone to enable the "AI Subtitles" auxiliary function. In this way, when the push window 20 is displayed for the first time, if the user does not enable the switch, the push capsule 22 is displayed on the top of the screen, so that in a process in which the mobile phone plays a video, the user may trigger, at any time through the push capsule 22, the mobile phone to perform the "AI Subtitles" auxiliary function, thereby improving user experience. In addition, because the status bar capsule 22 is displayed on the top of the screen and occupies a relatively small area, blocking of the video being played can be avoided.

It should be noted that descriptions are provided above by using an example in which the service control switch in the push window 20 is in the disabled state by default when the push window 20 is displayed. In another example, the service control switch in the push window 20 may alternatively be in the enabled state by default. In this case, if the user needs to use the "AI Subtitles" auxiliary service, the mobile phone may not be operated. In this way, after specific duration, the mobile phone displays the subtitle display box 21 on the screen and displays the status bar capsule 22 on the top of the screen. If the user does not need to use the "AI Subtitles" auxiliary service, the service control switch may be manually disabled.

Similarly, after the mobile phone starts the "AI Subtitles" auxiliary service, the user may disable the "AI Subtitles" auxiliary service by pulling down a notification bar. When the video is turned off, the mobile phone automatically disables the "AI Subtitles" auxiliary service.

It should be noted that the foregoing application scenarios are merely examples, and do not constitute a limitation on an application scenario of the method provided in the embodiments of this application. In another example, the method provided in the embodiments of this application may be further applied to another application scenario, for example, may be further applied to an alarm clock barrier scenario.

It should be noted that descriptions are provided above by using an example in which the electronic device is a mobile phone. In addition, the method provided in the embodiments of this application may be further applied to a tablet computer, a desktop computer, a laptop computer, a handheld computer, a notebook computer, a vehicle-mounted device, an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, or the like. This is not limited in embodiments of this application.

A software system of the electronic device may use a layered architecture, an event-driven architecture, a microkernel architecture, a micro-service architecture, or a cloud architecture. In the embodiments of this application, the software system of the electronic device is described by using an Android (Android) system with the layered architecture as an example.

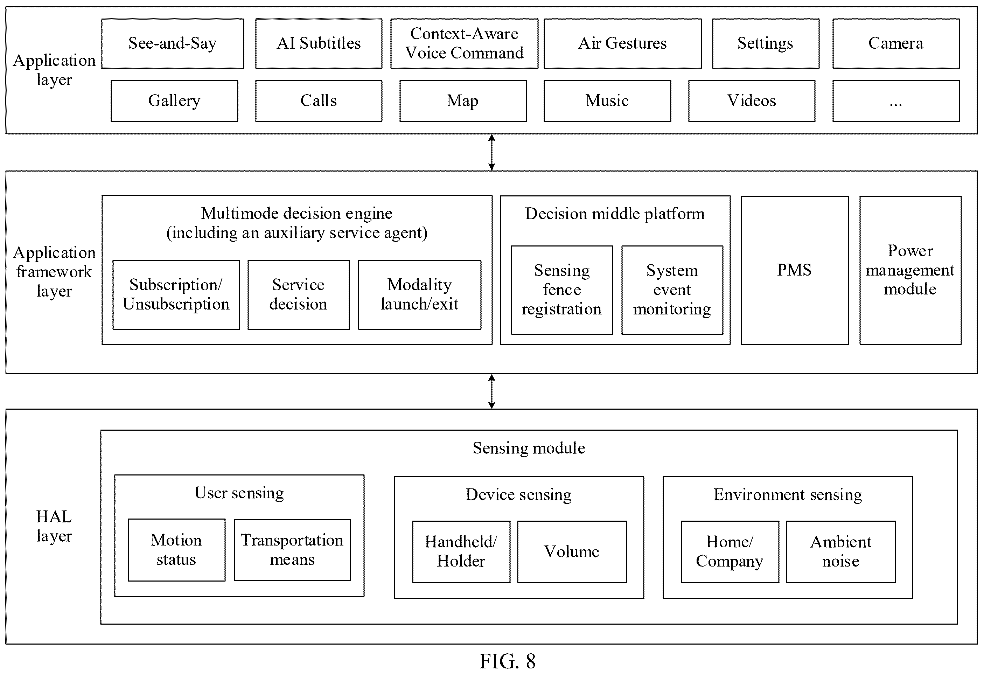

FIG. 8 is a block diagram of a software system of an electronic device according to an embodiment of this application. With reference to FIG. 8, in the layered architecture, software is divided into several layers, and each layer has a clear role and task. The layers communicate with each other through a software interface. In some embodiments, the Android system includes at least an application layer, an application framework layer, and a hardware abstraction layer (hardware abstract layer, HAL) from top to bottom.

The application layer may include a series of application packages. As shown in FIG. 8, the application packages may include applications such as Visual & Voice Interaction, AI Subtitles, Flexible Commands, Air Gestures, Settings, Camera, Gallery, Calls, Map, Music, and Videos.

The application framework layer provides an application programming interface (application programming interface, API) and a programming framework for the applications at the application layer. With reference to FIG. 8, in an example of this application, the application framework layer may include but is not limited to a multimode decision engine, a decision middle platform, an application package manager service (package manager service, PMS), and a power management module.

The multimode decision engine is configured to subscribe to or unsubscribe from a scenario fence of a barrier scenario related to an auxiliary service (which may also be referred to as a barrier scenario) from the decision middle platform, for example, a video barrier scenario in which the electronic device plays a video through a video application and the electronic device remains stationary on a holder for at least 5s. The multimode decision engine determines, based on a specific scenario identified by the decision middle platform and with reference to a user habit, a scenario matching rule, and the like, whether currently it is suitable to enter a multimodal interaction state. The multimode decision engine is further configured to make a service decision, that is, determine to push a specific auxiliary service, so that a user interacts with the electronic device. The multimode decision engine is further configured to launch or exit a modality, for example, guide the user to the multimodal interaction state in a specific manner.

In an example of this application, the multimode decision engine includes at least one auxiliary service agent. Different auxiliary service agents correspond to different auxiliary services, that is, the auxiliary service agent is in a one-to-one correspondence with the auxiliary service. For example, a "Visual & Voice Interaction" auxiliary service corresponds to an auxiliary service agent, and an "AI Subtitles" auxiliary service corresponds to an auxiliary service agent. The multimode decision engine interacts with a corresponding auxiliary service through the auxiliary service agent.

The decision middle platform is configured to: receive subscription to and unsubscription from a scenario fence by the multimode decision engine, and sense fence registration when there is a subscribed scenario fence, to identify, through interaction with a sensing module, whether the electronic device is in a barrier scenario. When the scenario fence is entered or exited, the decision middle platform notifies the multimode decision engine. In addition, the decision middle platform may be further configured to monitor a system event, for example, an application switching event.

The PMS is configured to manage an application package of an application on the electronic device, and the PMS can sense installation and uninstallation of the application on the electronic device.

The power management module may be configured to control a display of the electronic device to be turned on or off. For example, when power is supplied to the display of the electronic device, the display of the electronic device is enabled to be in a screen-on state; or when no power is supplied to the display, the display of the electronic device is enabled to be in a screen-off state.

It should be noted that in embodiments of this application, descriptions are provided by using only an example in which the application framework layer includes the plurality of foregoing modules. In addition, the application framework layer further includes some predefined functions. For example, a window manager, a content provider, a view system, a phone manager, a resource manager, and a notification manager are included. This is not limited in embodiments of this application.

The hardware abstraction layer is a package for a Linux kernel driver, and provides an interface to a higher-level layer. The hardware abstraction layer hides hardware interface details of a specific platform, and provides a virtual hardware platform to an operating system, so that the operating system is hardware independent and can be transplanted on a plurality of platforms. For example, the hardware abstraction layer provides a sensing module. The sensing module is configured to detect the electronic device, a user currently using the electronic device, and an environment in which the electronic device is located, that is, is configured to perform device sensing, user sending, and environment sensing, to provide various status detection fences. For example, the sensing module may be configured to: detect a motion status of the electronic device, detect a transportation means on which the electronic device is located, detect whether the electronic device is in a handheld state or is placed on a holder, detect current volume of the electronic device, detect a current geographical location (such as a home or a company) of the electronic device, and detect a noise level in an environment in which the electronic device is currently located.

It should be noted that only some layers of the software system are shown in FIG. 8 as examples, and do not constitute a limitation on an architecture of the software system of the electronic device. The software system may further include another layer. This is not limited in embodiments of this application.

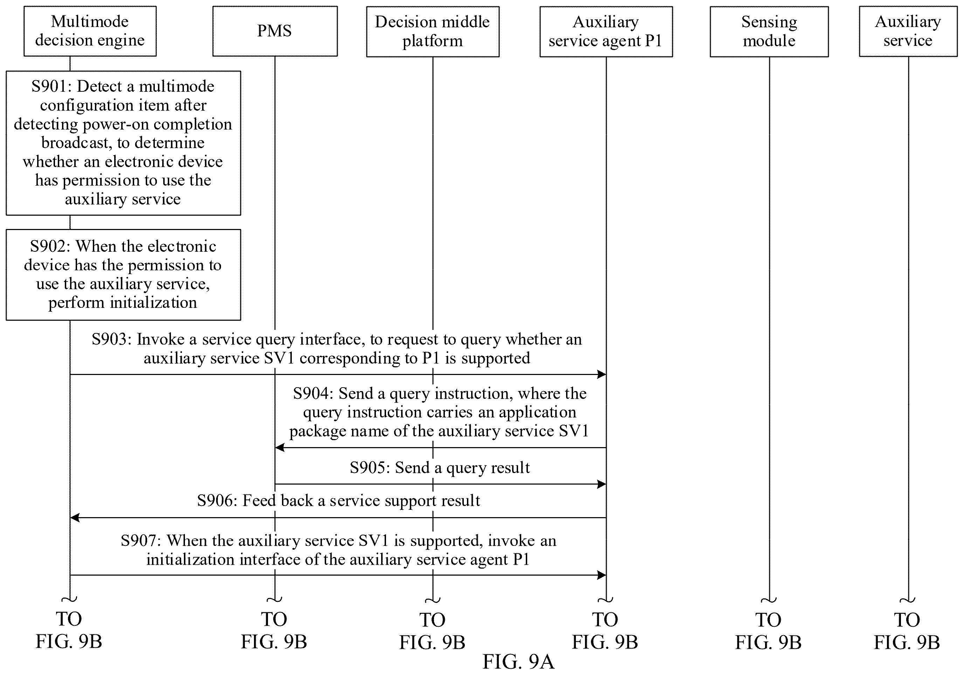

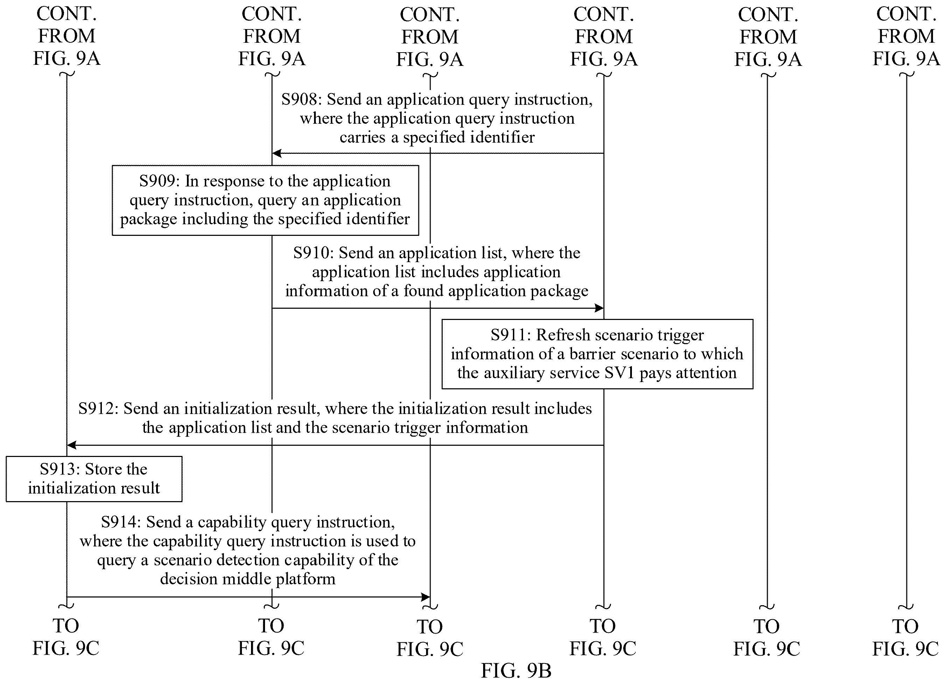

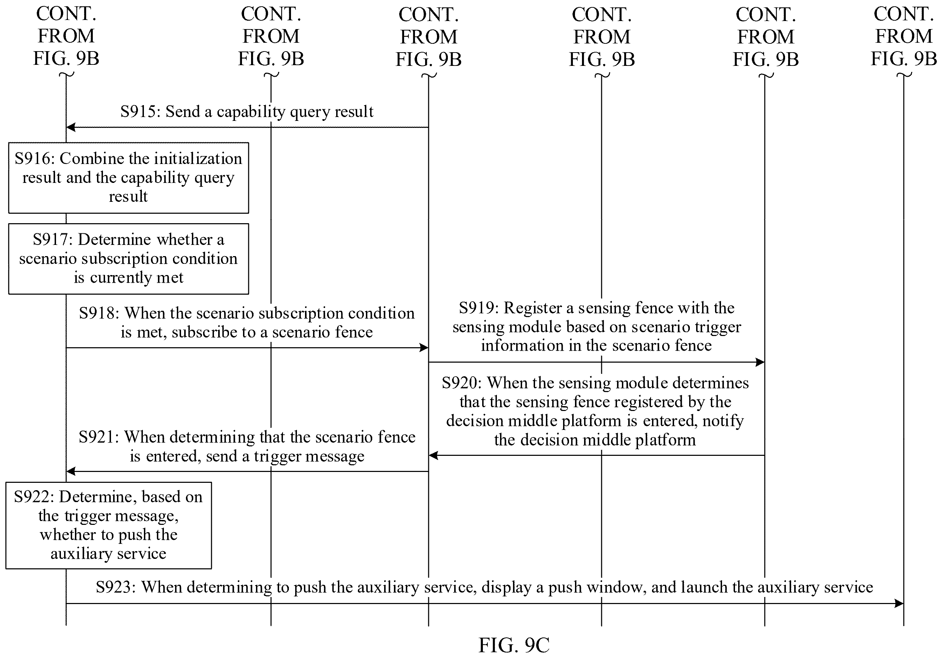

Based on the foregoing embodiments, the following describes the service push method provided in the embodiments of this application. With reference to FIG. 9A, FIG. 9B, and FIG. 9C, FIG. 9A, FIG. 9B, and FIG. 9C are a schematic flowchart of a service push method according to an example embodiment. As an example instead of a limitation, the method may be performed by the electronic device shown in FIG. 8. The electronic device may be implemented through interaction of a plurality of modules. The method may include all or some of the following content.

S901: A multimode decision engine detects a multimode configuration item after detecting power-on completion broadcast, to determine whether the electronic device has permission to use an auxiliary service.

In some embodiments, the multimode decision engine is defined as MmiDecisionService.

In an example of this application, the multimode decision engine is started after the electronic device is powered on, and the multimode decision engine may be disposed in an HnSystemServer service of an Android system. Because the HnSystemServer service is started relatively early, the multimode decision engine is started relatively early. If actual service logic is executed after the multimode decision engine is started, because initialization of another dependent service (for example, a decision middle platform) may not be completed, the multimode decision engine cannot normally interact with another module, for example, cannot interact with the decision middle platform. Therefore, in an example, the actual service logic may not be executed after the multimode decision engine is started, but a power-on broadcast monitor is registered, to monitor the power-on completion broadcast. When the power-on completion broadcast is detected through the power-on broadcast monitor, it indicates that the electronic device is powered on. In this case, the multimode decision engine executes the actual service logic, for example, detects the multimode configuration item, to determine whether the electronic device has the permission to use the auxiliary service.

For some electronic devices, these electronic devices may be controlled to have permission to use one or all auxiliary services. For some other electronic devices, the some other electronic devices may be controlled not to have permission to use one or all auxiliary services. Therefore, a cloud may deliver a configuration file to the electronic device, to indicate whether the electronic device has the permission to use the auxiliary service, or has permission to use a specific auxiliary service. In an example, the configuration file includes the multimode configuration item. The multimode configuration item may include a plurality of configuration items, for example, includes a general configuration item and at least one sub-configuration item. The at least one sub-configuration item is in a one-to-one correspondence with at least one auxiliary service. The general configuration item is used to limit whether the electronic device has permission to use all auxiliary services, and each sub-configuration item is used to limit whether the electronic device has permission to use a corresponding auxiliary service.

In an example of this application, after detecting the power-on broadcast, the multimode decision engine may determine, based on a status value of the general configuration item in the multimode configuration item and a status value of the sub-configuration item corresponding to the auxiliary service, whether the electronic device has permission to use each auxiliary service in the electronic device. For example, an auxiliary service SV1 is used as an example. If the status value of the general configuration item indicates that the electronic device has permission to use all the auxiliary services, and a status value of a sub-configuration item corresponding to the auxiliary service SV1 indicates that the electronic device has permission to use the auxiliary service SV1, it is determined that the electronic device has the permission to use the auxiliary service SV1. Otherwise, if the status value of the general configuration item indicates that the electronic device does not have permission to use all the auxiliary services, or if the status value of the general configuration item indicates that the electronic device has permission to use all the auxiliary services, but the status value of the sub-configuration item corresponding to the auxiliary service SV1 indicates that the electronic device does not have the permission to use the auxiliary service SV1, it is determined that the electronic device does not have the permission to use the auxiliary service SV1.

When there are a plurality of auxiliary services, it may be determined, in the foregoing detection manner, whether the electronic device has permission to use each of the plurality of auxiliary services. For any one of the plurality of auxiliary services, if the electronic device has permission to use the auxiliary service, the multimode decision engine may determine, by performing the following procedure, whether to subscribe to a scenario fence corresponding to the auxiliary service. If the electronic device does not have the permission to use the auxiliary service, the multimode decision engine does not subscribe to the scenario fence corresponding to the auxiliary service.

It should be noted that step S901 is an optional operation. In another example, the step may not be included. For example, when there is no multimode configuration item in the electronic device, the operation in S901 may not be performed.

S902: When the electronic device has the permission to use the auxiliary service, the multimode decision engine performs initialization.

In an example of this application, an initialization operation of the multimode decision engine includes registering a screen-on/off monitor and registering a power saving mode monitor. The screen-on/off monitor is configured to monitor screen-on/off broadcast of the electronic device, and the power saving mode monitor is configured to monitor whether a power saving mode of the electronic device is enabled. When the electronic device is in a screen-off state or the power saving mode, the multimode decision engine may not subscribe to a scenario fence of a barrier scenario related to the auxiliary service, to avoid power consumption of the electronic device. Therefore, to facilitate subsequent determining, by the multimode decision engine, of whether to perform a subscription operation, the multimode decision engine may register the screen-on/off monitor and the power saving mode monitor in an initialization process, so that subsequently the screen-on/off broadcast and power saving mode broadcast of the electronic device are respectively monitored through the screen-on/off monitor and the power saving mode monitor, to determine, based on a monitoring result, whether to subscribe to the scenario fence of the barrier scenario related to the auxiliary service.

In addition, initialization of the multimode decision engine further includes instance initialization of each of the at least one auxiliary service agent. Because the multimode decision engine and each auxiliary service are in respective independent processes, the multimode decision engine and each auxiliary service need to frequently communicate with each other, and a process of each auxiliary service is not a resident process, the auxiliary service usually does not have a proper occasion to register a corresponding communication callback with the multimode decision engine. Therefore, as described above, the auxiliary service agent corresponding to each auxiliary service is disposed in the multimode decision engine, and the multimode decision engine interacts with the auxiliary service through the auxiliary service agent. In implementation, the multimode decision engine may extract a common interface (for example, an IAuxiliaryService interface), and each auxiliary service agent implements each method defined in the IAuxiliaryService interface, and communicates with each auxiliary service.

In an example, the initialization operation of the multimode decision engine may further include registering a switch monitor. There may be one or more switch monitors. When there are a plurality of switch monitors, different switch monitors are configured to monitor statuses of different switches. In an example of this application, the plurality of switch monitors include a first switch monitor, a second switch monitor, and a third switch monitor. The first switch monitor is configured to monitor a switch of a basic service, the second switch monitor is configured to monitor an auxiliary service global switch, and the third switch monitor is configured to monitor a switch of a status bar capsule. The switch of the basic service is configured to control all services in the electronic device to be enabled or disabled, and all the services include the auxiliary service. If the switch of the basic service is in a disabled state, it may be determined that all the services in the electronic device are disabled, that is, all the services cannot be used. The auxiliary service global switch is configured to control all the auxiliary services in the electronic device to be enabled or disabled. If the auxiliary service global switch is in the disabled state, it may be determined that all the auxiliary services in the electronic device are disabled. The switch of the status bar capsule is configured to control whether a service can be pushed through the status bar capsule. If the switch of the status bar capsule is in the disabled state, the electronic device cannot push a service through the status bar capsule.

S903: The multimode decision engine invokes a service query interface of an auxiliary service agent P1, to request to query whether the auxiliary service SV1 corresponding to P1 is supported.

The auxiliary service agent P1 is any one of the at least one auxiliary service agent. For example, the auxiliary service SV1 is the "Visual & Voice Interaction" auxiliary service. Correspondingly, the auxiliary service agent P1 is an auxiliary service agent corresponding to the "Visual & Voice Interaction" auxiliary service.

The querying whether the auxiliary service SV1 is supported means to query whether the auxiliary service SV1 provided by the electronic device can be implemented. That is, before the auxiliary service SV1 is used, the multimode decision engine may invoke the service query interface of the auxiliary service agent P1, to query, through the auxiliary service agent P1, whether the electronic device supports the auxiliary service SV1, so as to ensure that the auxiliary service SV1 can be subsequently normally pushed and launched.

It should be noted that in this embodiment of this application, descriptions are provided by using one auxiliary service agent in the multimode decision engine as an example. When there are a plurality of auxiliary service agents in the multimode decision engine, the multimode decision engine invokes a service query interface of each of the plurality of auxiliary service agents, to query, through each of the plurality of auxiliary service agents, whether an auxiliary service corresponding to each auxiliary service agent is supported. For example, in an example in which the electronic device provides the "Visual & Voice Interaction" auxiliary service and an "AI Subtitles" auxiliary service, the multimode decision engine invokes a service query interface of an auxiliary service agent corresponding to the "Visual & Voice Interaction" auxiliary service, to query whether the "Visual & Voice Interaction" auxiliary service provided by the electronic device is supported, and invokes a service query interface of an auxiliary service agent corresponding to the "AI Subtitles" auxiliary service, to query whether the "AI Subtitles" auxiliary service provided by the electronic device is supported.

S904: The auxiliary service agent P1 sends a query instruction to a PMS, where the query instruction carries an application package name of the auxiliary service SV1.

Implementation of the auxiliary service SV1 usually may be related to a hardware condition and/or a software condition of the electronic device. When it is queried whether the auxiliary service SV1 is supported, the auxiliary service agent P1 queries whether a hardware condition and/or a software condition related to functional implementation of the auxiliary service SV1 meet/meets a preset service support condition from the PMS, to determine whether the auxiliary service SV1 can be implemented. The preset service support condition may be set based on a requirement. Different auxiliary services may correspond to different preset service support conditions.

For example, in an example in which the auxiliary service SV1 is the "Visual & Voice Interaction" auxiliary service, for implementation of the auxiliary service, it usually needs to be queried whether a current application version of "Visual & Voice Interaction" is a preset version, whether hardware of the electronic device provides a voice device, whether the electronic device provides an echo cancelation capability, and the like. If the software condition and/or the hardware condition of the electronic device meet/meets a requirement, it is determined that the auxiliary service SV1 is supported. Otherwise, it is determined that the auxiliary service SV1 is not supported. The auxiliary service SV1 can be subsequently used only when the auxiliary service SV1 is supported. Otherwise, the auxiliary service SV1 cannot be used. Therefore, after the multimode decision engine runs, the auxiliary service agent P1 queries whether the corresponding auxiliary service SV1 is supported from the PMS, to determine whether the auxiliary service SV1 provided in the electronic device can be used.

It may be learned from the foregoing descriptions that the PMS is configured to manage an application package of an application on the electronic device. Therefore, the auxiliary service agent P1 may transfer the application package name of the auxiliary service SV1 to the PMS, to request the PMS to query, based on the application package name, the hardware condition and/or the software condition related to the auxiliary service SV1. For example, in an example in which the auxiliary service agent P1 is an agent of the "Visual & Voice Interaction" auxiliary service SV1, the auxiliary service agent P1 sends a query instruction to the PMS, where the query instruction carries an application package name of the "Visual & Voice Interaction" auxiliary service, so that the PMS queries version information corresponding to "Visual & Voice Interaction" based on the application package name, queries whether the electronic device is configured with a voice device and whether the echo cancelation capability is provided for the "Visual & Voice Interaction" auxiliary service, and the like.

It should be noted that the hardware condition and the software condition that are described above and that are related to the "Visual & Voice Interaction" auxiliary service are merely examples. Another hardware condition and/or software condition may be further related to the "Visual & Voice Interaction" auxiliary service. This is not limited in embodiments of this application.

It should be noted that when the multimode decision engine includes a plurality of auxiliary service agents, each auxiliary service agent sends a query instruction to the PMS, to request to query whether an auxiliary service corresponding to each auxiliary service agent is supported.

S905: The PMS sends a query result to the auxiliary service agent P1.

That is, the PMS queries, in response to the query instruction, the software condition and/or the hardware software related to the auxiliary service P1, and then feeds back the query result to the auxiliary service agent P1.

When the multimode decision engine includes a plurality of auxiliary service agents, the PMS queries, in response to the query instruction sent by each auxiliary service agent, a software condition and/or a hardware condition related to the auxiliary service corresponding to each auxiliary service agent, and feeds back a query result to each auxiliary service agent after the query.

S906: The auxiliary service agent P1 feeds back a service support result to the multimode decision engine.

After receiving the query result fed back by the PMS, the auxiliary service agent P1 determines, based on the query result, whether the auxiliary service SV1 is supported, to obtain the service support result. For example, the auxiliary service SV1 is "Visual & Voice Interaction". If the version information in the query result is the same as preset version information, the electronic device is configured with the voice device, and the echo cancelation capability is provided for the "Visual & Voice Interaction" auxiliary service, it may be determined that the service support result is "T", and is used to indicate that the auxiliary service SV1 is supported. Otherwise, if not all of the foregoing conditions are met, it may be determined that the service support result is "F", and is used to indicate that the auxiliary service SV1 is not supported. Then, the auxiliary service agent P1 feeds back the service support result to the multimode decision engine. In an example, the auxiliary service agent may feed back the query result to the multimode decision engine in a callback manner.

It should be noted that when the multimode decision engine includes a plurality of auxiliary service agents, after receiving the query result fed back by the PMS, each auxiliary service agent determines whether the corresponding auxiliary service is supported, and feeds back a service support result determined by each auxiliary service agent to the multimode decision engine.

S907: When the auxiliary service SV1 is supported, the multimode decision engine invokes an initialization interface of the auxiliary service agent P1.

When the service support result indicates that the auxiliary service SV1 is supported, the multimode decision engine invokes the initialization interface of the auxiliary service agent P1, to initialize the auxiliary service SV1 through the auxiliary service agent P1, so that the auxiliary service SV1 transfers a barrier scenario to which the service pays attention, some parameters involved in different barrier scenarios, and the like to the multimode decision engine through the auxiliary service agent P1. For a specific initialization operation, refer to the following operations in S908 to S913.

It should be noted that in this embodiment of this application, descriptions are provided by using an example in which the service support result indicates that the auxiliary service SV1 is supported. If the service support result indicates that the auxiliary service SV1 is not supported, no subsequent operation is performed for the auxiliary service SV1.

When the electronic device includes a plurality of auxiliary services, for another auxiliary service in the plurality of auxiliary services, if the another auxiliary service is supported, the multimode decision engine may initialize the another auxiliary service based on the following procedure through a corresponding auxiliary service agent.

S908: The auxiliary service agent P1 sends an application query instruction to the PMS, where the application query instruction carries a specified identifier.

The specified identifier may be set based on a requirement. For any application on the electronic device, if an application package of the application includes the specified identifier, it may be determined that the auxiliary service SV1 supports the application. That is, in a running process of the application, when the electronic device is in a barrier scenario to which the auxiliary service SV1 pays attention, the multimode decision engine may launch the auxiliary service SV1 to provide the auxiliary service. On the contrary, if the application package of the application does not include the specified identifier, it may be determined that the auxiliary service SV1 does not support the application. For example, if an application package of a video application A on the electronic device includes the specified identifier, it may be determined that the auxiliary service SV1 supports the video application A; if an application package of a video application B on the electronic device does not include the specified identifier, it may be determined that the auxiliary service SV1 does not support the video application B; and so on.

In an example, the specified identifier may be an identifier in an intent-filter parameter, for example, may be denoted as action. As an example instead of a limitation, the specified identifier of the auxiliary service SV1 may be expressed as follows:
<intent-filter>
<action android:name="com.hihonor.android.mmi.EventControl">

In an example of this application, different auxiliary services may correspond to different specified identifiers. For example, the "Visual & Voice Interaction" auxiliary service may correspond to a specified identifier 1, and the "AI Subtitles" auxiliary service may correspond to a specified identifier 2.

In an example of this application, if one auxiliary service supports a plurality of barrier scenarios, different barrier scenarios of one auxiliary service correspond to different specified identifiers. For example, if the "Visual & Voice Interaction" auxiliary service supports a barrier scenario 1 and a barrier scenario 2, the barrier scenario 1 supported by the "Visual & Voice Interaction" auxiliary service corresponds to a specified identifier 1, and the barrier scenario 2 supported by the "Visual & Voice Interaction" auxiliary service corresponds to a specified identifier 2. In this case, when sending the application query instruction to the PMS, the auxiliary service agent P1 may separately include the specified identifier 1 and the specified identifier 2 in the application query instruction.

S909: In response to the application query instruction, the PMS queries an application package including the specified identifier.

As described above, if the application package includes the specified identifier, it indicates that an application corresponding to the application package can be supported by the auxiliary service SV1. Therefore, the PMS queries the application package including the specified identifier, to determine an application that can be supported by the auxiliary service SV1. In an example, the PMS may traverse the application package of the application installed on the electronic device, to query an application package that is of a specific application and that includes the specified identifier.

In an example of this application, after determining the application package including the specified identifier, the PMS may generate an application list. The application list includes application information, and an application package of an application corresponding to the application information includes the specified identifier. That is, application information corresponding to the found application package including the specified identifier may be added to the application list, to feed back the application list to the auxiliary service agent P1 after the query ends.

The application information is information used to uniquely identify an application. For example, the application information may be an application identifier, an application package name, or the like.

S910: The PMS sends an application list to the auxiliary service agent P1, where the application list includes application information of the found application package.

It should be noted that in this embodiment of this application, descriptions are provided by using an example in which the PMS feeds back an application query result to the auxiliary service agent P1 in a form of an application list. In another example, the application query result may be fed back to the auxiliary service agent P1 in another form. For example, the application query result may be fed back in an array form. This is not limited in embodiments of this application.

S911: The auxiliary service agent P1 refreshes scenario trigger information of the barrier scenario to which the auxiliary service SV1 pays attention.

In an example of this application, the scenario trigger information of the barrier scenario to which the auxiliary service SV1 pays attention may be prestored in the auxiliary service agent P1. The scenario trigger information is used to describe a trigger condition of the barrier scenario. For example, in an example in which the auxiliary service SV1 is the "Visual & Voice Interaction" auxiliary service, the trigger condition of the barrier scenario may include: 1. A target video application is entered, where the target video application is set based on a requirement, and includes, for example, the video application A and the video application B. 2. The electronic device is on a holder or in a stationary state (for example, for more than 6s). 3. The electronic device is in a non-high-noise and non-public place. For another example, in an example in which the auxiliary service SV1 is the "AI Subtitles" auxiliary service, the trigger condition of the barrier scenario may include: 1. A target application is entered, where the target application is provided by a service side. 2. An audio playing fence is triggered (that is, there is audio being played). 3. In a same target application, an audio playing fence is detected only once (to avoid unintentional frequent entry/exit caused by video/audio stream switching in an application).

In an example, the scenario trigger information may be a string, that is, the trigger condition of the barrier scenario may be indicated by using a string.

When the auxiliary service SV1 pays attention to a plurality of barrier scenarios, the auxiliary service agent P1 obtains scenario trigger information of each barrier scenario to which the auxiliary service SV1 pays attention. For each barrier scenario, the auxiliary service agent P1 establishes a mapping relationship between the scenario trigger information of the barrier scenario and an application list corresponding to the barrier scenario.

S912: The auxiliary service agent P1 sends an initialization result to the multimode decision engine, where the initialization result includes the application list and the scenario trigger information.

In an example, if the auxiliary service SV1 pays attention to a plurality of barrier scenarios, the initialization result fed back by the auxiliary service agent P1 to the multimode decision engine includes a plurality of groups of results, and each group of results includes the scenario trigger information and the application list of each barrier scenario.

S913: The multimode decision engine stores the initialization result.

S914: The multimode decision engine sends a capability query instruction to the decision middle platform, where the capability query instruction is used to query a scenario detection capability of the decision middle platform.

The scenario detection capability of the decision middle platform is a barrier scenario detection capability, for example, may include a video barrier scenario detection capability and an alarm clock barrier scenario detection capability. Different electronic devices or different versions of a same type of electronic device may have different degrees of support. For example, in an electronic device A, the decision middle platform may have the video barrier scenario detection capability and the alarm clock barrier scenario detection capability, while in an electronic device B, the decision middle platform may have only the video barrier scenario detection capability. Therefore, the multimode decision engine usually needs to actively query the scenario detection capability of the decision middle platform from the decision middle platform. Therefore, the multimode decision engine may send the capability query instruction to the decision middle platform.

S915: The decision middle platform sends a capability query result to the multimode decision engine.

The capability query result includes the scenario detection capability of the decision middle platform. In an example of this application, the capability query result includes a plurality of strings, and each string is used to indicate one scenario detection capability of the decision middle platform.

S916: The multimode decision engine combines the initialization result and the capability query result.

After receiving the capability query result fed back by the decision middle platform, the multimode decision engine may determine, based on the capability query result, whether the decision middle platform has a capability of detecting a barrier scenario indicated by the scenario trigger information in the initialization result. If the decision middle platform has the capability of detecting the barrier scenario indicated by the scenario trigger information in the initialization result, the initialization result is retained, and the multimode decision engine may establish a mapping relationship between the auxiliary service SV1 and both the application list and the scenario trigger information in the initialization result. Subsequently, a scenario fence of the auxiliary service SV1 may be subscribed to. If the decision middle platform does not have the capability of detecting the barrier scenario indicated by the scenario trigger information in the initialization result, the initialization result may be deleted. Subsequently, the scenario fence of the auxiliary service SV1 is not subscribed to.

When the electronic device provides a plurality of auxiliary services, the multimode decision engine may perform screening and storage processing on an initialization result corresponding to each auxiliary service in the foregoing manner based on the capability query result fed back by the decision middle platform. An initialization result of a remaining auxiliary service that is not deleted may be used to subscribe to a scenario fence. For specific implementation, refer to the following content.

S917: The multimode decision engine determines whether a scenario subscription condition is currently met.

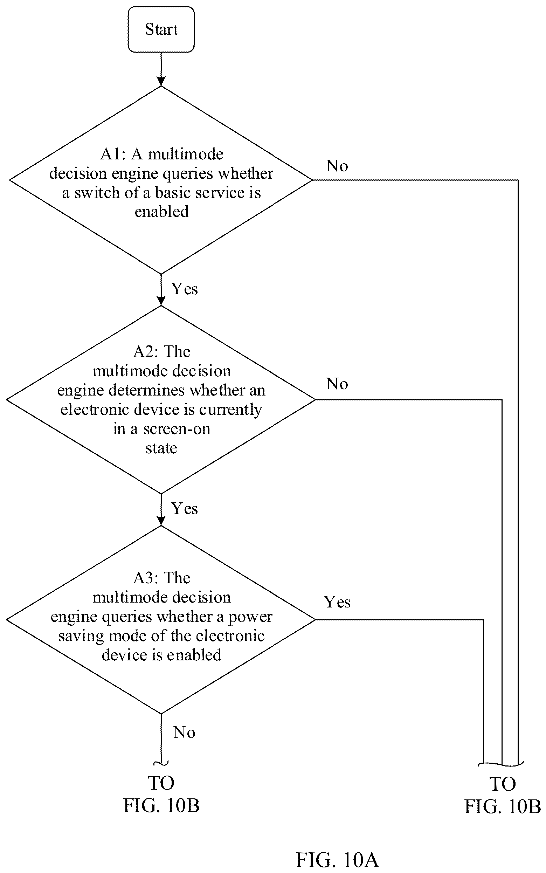

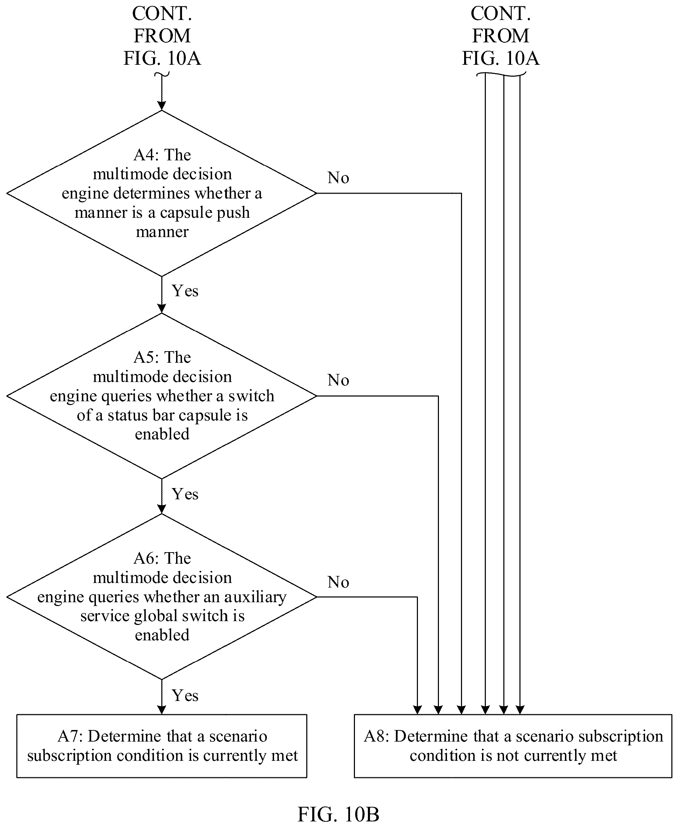

In an example of this application, with reference to FIG. 10A and FIG. 10B, specific implementation in which the multimode decision engine determines whether the scenario subscription condition is currently met may include the following several steps.

A1: The multimode decision engine queries whether the switch of the basic service is enabled.

As described above, the switch of the basic service is configured to enable or disable all the services provided by the electronic device. In addition to the auxiliary service, all the services include another service.

In an example of this application, the electronic device provides the switch of the basic service through a Settings application. As described above, the multimode decision engine registers the first switch monitor during initialization. When the user enables the switch of the basic service in the Settings application, the Settings application may broadcast basic service enabling broadcast. The multimode decision engine may detect the basic service enabling broadcast through the first switch monitor. In this case, it is determined that the switch of the basic service is in an enabled state. When the user disables the switch of the basic service in the Settings application, the Settings application may broadcast basic service disabling broadcast. The multimode decision engine may detect the basic service disabling broadcast through the first switch monitor. In this case, it is determined that the switch of the basic service is in the disabled state. After detecting the basic service enabling broadcast or the basic service disabling broadcast, the multimode decision engine may record a status of the switch of the basic service of the electronic device. In this way, when query needs to be performed, it may be determined, based on the recorded information, whether the switch of the basic service is in the enabled state.

In another example of this application, when the multimode decision engine needs to query the status of the switch of the basic service, the multimode decision engine may query the status of the switch of the basic service from the Settings application, for example, may send a basic service status query instruction to the Settings application. In response to the basic service status query instruction, the Settings application queries whether the switch of the basic service is enabled, and feeds back a query result to the multimode decision engine.

If the basic service is enabled, it indicates that all the services provided by the electronic device can be used. In this case, the following operation in A2 is performed. Otherwise, if the basic service is not enabled, it indicates that none of all the services in the electronic device can be used. In this case, the multimode decision engine determines that the scenario subscription condition is not met, that is, performs the following operation in A8.

A2: The multimode decision engine determines whether the electronic device is currently in a screen-on state.

In an example of this application, the multimode decision engine registers the screen-on/off monitor during initialization. When controlling a screen to be turned on, the power management module may broadcast the screen-on broadcast. Correspondingly, the multimode decision engine may detect the screen-on broadcast through the screen-on/off monitor, and then it may be determined that the electronic device is in the screen-on state. When controlling the screen to be turned off, the power management module may broadcast the screen-off broadcast. Correspondingly, the multimode decision engine may detect the screen-off broadcast through the screen-on/off monitor, and then it may be determined that the electronic device is in a screen-off state. After detecting the screen-off broadcast or the screen-on broadcast, the multimode decision engine may record the screen-on/off state of the electronic device. In this way, when query needs to be performed, it may be determined, based on the recorded screen-on/off state, whether the electronic device is in the screen-on state.

In another example of this application, when the multimode decision engine needs to determine whether the electronic device is in the screen-on state, the multimode decision engine may send a screen status query instruction to the power management module. After receiving the screen status query instruction, the power management module determines whether power is currently supplied to a display. If power is being supplied to the display, it is determined that the display is in a screen-on state. Otherwise, if the power management module currently does not supply power to the display, it is determined that the display is in a screen-off state. After determining the screen-on/off state of the display, the power management module feeds back the screen-on/off state to the multimode decision engine, so that the multimode decision engine determines whether the electronic device is currently in the screen-on state.

If the electronic device is currently in the screen-on state, it indicates that the user is currently using the electronic device. In this case, the following operation in A3 is performed. Otherwise, if the electronic device is currently not in the screen-on state, it indicates that the user currently does not use the electronic device. In this case, the multimode decision engine determines that the scenario subscription condition is not met, that is, performs the following operation in A8.

A3: The multimode decision engine queries whether the power saving mode of the electronic device is enabled.

In an example of this application, the multimode decision engine registers the power saving mode monitor during initialization, and the Settings application on the electronic device provides a switch of the power saving mode. When the user enables the switch of the power saving mode in the Settings application, the Settings application may broadcast power saving mode enabling broadcast. Correspondingly, the multimode decision engine may detect the power saving mode enabling broadcast through the power saving mode monitor, and then it may be determined that the power saving mode of the electronic device is enabled. When the user disables the switch of the power saving mode in the Settings application, the Settings application may broadcast power saving mode disabling broadcast. Correspondingly, the multimode decision engine may detect the power saving mode disabling broadcast through the power saving mode monitor, and then it may be determined that the power saving mode of the electronic device is disabled. After detecting the power saving mode enabling broadcast or the power saving mode disabling broadcast, the multimode decision engine may record this state. In this way, when query needs to be performed, it may be determined, based on the recorded state, whether the power saving mode of the electronic device is in the enabled state.

In another example of this application, the Settings application on the electronic device provides a switch of the power saving mode. When it needs to be queried whether the power saving mode of the electronic device is enabled, the multimode decision engine may send a power saving mode query instruction to the Settings application. After receiving the power saving mode query instruction, the Settings application queries a status of the switch of the power saving mode. If the switch of the power saving mode is in the enabled state, it is determined that the power saving mode is enabled. If the switch of the power saving mode is in the disabled state, it is determined that the power saving mode is disabled. After determining whether the power saving mode is enabled, the Settings application feeds back a query result of the power saving mode to the multimode decision engine, so that the multimode decision engine can determine whether the power saving mode of the electronic device is in the enabled state.

After the scenario fence is subscribed to, specific power needs to be consumed to perform scenario detection. Therefore, if the power saving mode is not enabled, the following operation in A4 is performed. Otherwise, if the power saving mode is enabled, the multimode decision engine may determine that the scenario subscription condition is not met, that is, performs the following operation in A8.

A4: The multimode decision engine determines whether a manner is a capsule push manner.

The capsule push manner means to push an auxiliary service through the status bar capsule, for example, as shown in 03 in FIG. 2C.

In an example of this application, the multimode decision engine may determine, based on a type of the auxiliary service, whether the manner is the capsule push manner. For example, for some types of auxiliary services, the capsule push manner may be preset, for example, the "Visual & Voice Interaction" auxiliary service, while for some types of auxiliary services, the capsule push manner may not be set. Therefore, it may be determined, based on the type of the auxiliary service, whether the manner is the capsule push manner.

If it is determined that the manner is the capsule push manner, the following operation in A5 is performed. Otherwise, if the manner is not the capsule push manner, the multimode decision engine may determine that the scenario subscription condition is not met, that is, performs the following operation in A8.

A5: The multimode decision engine queries whether the switch of the status bar capsule is enabled.

In an example of this application, the multimode decision engine registers the third switch monitor during initialization, and the Settings application on the electronic device provides the switch of the status bar capsule. When the user triggers the switch of the status bar capsule to the enabled state in the Settings application, the Settings application may broadcast capsule switch enabling broadcast. Correspondingly, the multimode decision engine may detect the capsule switch enabling broadcast through the third switch monitor, and then it may be determined that the switch of the status bar capsule is enabled. When the user triggers the switch of the status bar capsule to the disabled state in the Settings application, the Settings application may broadcast capsule switch disabling broadcast. Correspondingly, the multimode decision engine may detect the capsule switch disabling broadcast through the third switch monitor, and then it may be determined that the switch of the status bar capsule is disabled. After detecting the capsule switch enabling broadcast or the capsule switch disabling broadcast, the multimode decision engine may record this state. In this way, when query needs to be performed, it may be determined, based on the recorded state, whether the switch of the status bar capsule is enabled.

In another example of this application, the Settings application on the electronic device provides the switch of the status bar capsule. When the multimode decision engine needs to query whether the switch of the status bar capsule is enabled, the multimode decision engine may send a capsule switch query instruction to the Settings application. After receiving the capsule switch query instruction, the Settings application queries whether the switch of the status bar capsule is in the enabled state, and then feeds back a query result to the multimode decision engine, so that the multimode decision engine determines whether the switch of the status bar capsule is enabled.

If the switch of the status bar capsule is in the enabled state, it indicates that the auxiliary service can be pushed through the status bar capsule. In this case, the following operation in A6 is performed. Otherwise, if the switch of the status bar capsule is in the disabled state, it indicates that the auxiliary service cannot be pushed through the status bar capsule. In this case, the multimode decision engine determines that the scenario subscription condition is not met, that is, performs the following operation in A8.

It should be noted that in this embodiment of this application, descriptions are provided by using an example in which the auxiliary service is pushed through the status bar capsule. In another example, the auxiliary service may be pushed in another manner. For example, the auxiliary service may be pushed by using a notification message. As an example instead of a limitation, if the multimode decision engine determines that the capsule push manner is not set for the auxiliary service SV1, it may be queried whether there is another push manner. If there is another push manner, the following operation in A6 is performed. Otherwise, if there is no another push manner, the multimode decision engine may determine that the scenario subscription condition is not met, that is, performs the following operation in A8.

A6: The multimode decision engine queries whether the auxiliary service global switch is enabled.

As described above, the auxiliary service global switch is configured to control all the auxiliary services provided in the electronic device to be enabled or disabled.

In an example of this application, the multimode decision engine registers the second switch monitor during initialization, and the Settings application on the electronic device provides the auxiliary service global switch. When the user triggers the auxiliary service global switch to the enabled state in the Settings application, the Settings application may broadcast global switch enabling broadcast. Correspondingly, the multimode decision engine may detect the global switch enabling broadcast through the second switch monitor, and then it may be determined that the auxiliary service global switch is enabled. When the user triggers the auxiliary service global switch to the disabled state in the Settings application, the Settings application may broadcast global switch disabling broadcast. Correspondingly, the multimode decision engine may detect the global switch disabling broadcast through the second switch monitor, and then it may be determined that the auxiliary service global switch is disabled. After detecting the global switch enabling broadcast or the global switch disabling broadcast, the multimode decision engine may record this state. In this way, when query needs to be performed, it may be determined, based on the recorded state, whether the auxiliary service global switch is enabled.

In another example of this application, the electronic device provides the auxiliary service global switch through the Settings application. When the multimode decision engine needs to query whether the auxiliary service global switch is enabled, the multimode decision engine may query a global switch query instruction to the Settings application. After receiving the global switch query instruction, the Settings application queries a status of the auxiliary service global switch, and then feeds back a query result to the multimode decision engine, so that the multimode decision engine determines whether the auxiliary service global switch is enabled.

If the auxiliary service global switch is in the enabled state, the following operation in A7 is performed. Otherwise, if the auxiliary service global switch is in the disabled state, it indicates that the auxiliary service provided in the electronic device cannot be used. In this case, the multimode decision engine determines that the scenario subscription condition is not currently met, that is, performs the following operation in A8.

A7: Determine that the scenario subscription condition is currently met.

If the auxiliary service global switch is in the enabled state, it indicates that the auxiliary service provided in the electronic device can be used. In this case, the multimode decision engine determines that the scenario subscription condition is currently met.

A8: Determine that the scenario subscription condition is not currently met.

It should be noted that the foregoing implementation of determining whether the scenario subscription condition is met is merely an example. In another example, the determining process may further include another manner. For example, the another manner may include some or more operations in the foregoing implementation process. For example, when it is found that the auxiliary service global switch is in the enabled state, it may further continue to be queried whether a local switch of the auxiliary service SV1 is in the enabled state. Alternatively, a determining sequence may be different from the foregoing determining sequence. This is not limited in embodiments of this application.

S918: When the scenario subscription condition is met, the multimode decision engine subscribes to a scenario fence from the decision middle platform.

In an example of this application, the scenario fence may include at least one group of correspondences, and each group of correspondence may include a mapping relationship between scenario trigger information and an application list corresponding to one auxiliary service.

In an example, if one auxiliary service involves a plurality of barrier scenarios, and the decision middle platform has a scenario detection capability for each barrier scenario, the multimode decision engine subscribes to a scenario fence of each barrier scenario from the decision middle platform. For example, if the auxiliary service SV1 involves a video barrier scenario and an alarm clock barrier scenario, and the decision middle platform has a scenario detection capability for each of the two barrier scenarios, the multimode decision engine subscribes to a scenario fence of the video barrier scenario from the decision middle platform, and subscribes to a scenario fence of the alarm clock barrier scenario from the decision middle platform. The scenario fence of the video barrier scenario includes scenario trigger information and a related application list of the video barrier scenario, and the scenario fence of the alarm clock barrier scenario includes scenario trigger information and a related application list of the alarm clock barrier scenario.

If there are a plurality of auxiliary services, the multimode decision engine subscribes to a scenario fence corresponding to each auxiliary service from the decision middle platform.

After the multimode decision engine subscribes to the scenario fence from the decision middle platform, if the decision middle platform detects that the subscribed scenario fence is triggered, the multimode decision engine is notified, so that the multimode decision engine determines whether to push the auxiliary service. In an example, for specific implementation, refer to the following steps.

S919: The decision middle platform registers a sensing fence with a sensing module based on scenario trigger information in the scenario fence.

One or more sensing fences may be registered with the sensing module.

The decision middle platform may determine, based on the scenario trigger information in the scenario fence, a scenario that needs to be triggered, and then register the sensing fence with the sensing module. For example, it is assumed that the scenario trigger information indicates that it needs to be detected whether the electronic device is on the holder or in the stationary state, and whether the electronic device is in a non-high-noise and non-public place. In this case, the decision middle platform registers a device sensing fence and an environment sensing fence with the sensing module, so that the sensing module notifies the decision middle platform when sensing that the electronic device is on the holder or in the stationary state, and notifies the decision middle platform when detecting that the electronic device is in a non-high-noise and non-public place.

When there are scenario fences of a plurality of auxiliary services, the decision middle platform registers a sensing fence with the sensing module based on scenario trigger information in a scenario fence of each auxiliary service.

S920: When the sensing module determines that the sensing fence registered by the decision middle platform is entered, notify the decision middle platform.

The sensing module may perform sensing through a sensor configured in the electronic device. For example, the sensor includes but is not limited to a gyroscope sensor or an acceleration sensor. When sensing that the electronic device enters the sensing fence registered by the decision middle platform, the sensing module notifies the decision middle platform of a specific sensing fence that is triggered.

S921: When determining that the scenario fence is entered, the decision middle platform sends a trigger message to the multimode decision engine.

In an example of this application, when the sensing module notifies the decision module that the sensing fence is triggered, the decision middle platform may determine, based on the currently entered sensing fence, whether a scenario in which the electronic device is located is a barrier scenario indicated by the scenario trigger information in the scenario fence. If the scenario in which the electronic device is currently located is the barrier scenario indicated by the scenario trigger information in the scenario fence, the decision middle platform determines whether a currently focused application (namely, an application that is running in the foreground) on the electronic device is in an application list in the scenario fence. If the currently focused application on the electronic device is in the application list in the scenario fence, the decision middle platform determines that the scenario fence is currently entered. In this case, the decision middle platform sends the trigger message to the multimode decision engine, to notify the multimode decision engine that the subscribed scenario fence is triggered.

In an example of this application, the trigger message may carry the scenario trigger information, application information of the application that is running in the foreground, and a scenario status. The scenario trigger information in the trigger message may be used to indicate a specific barrier scenario that is triggered, the application information in the trigger message is used to indicate a specific application that is related to the currently triggered barrier scenario, and the scenario status in the trigger message is used to indicate whether the application is running in the foreground.

S922: The multimode decision engine determines, based on the trigger message, whether to push the auxiliary service.

In an example, the multimode decision engine queries whether there is a matching auxiliary service from retained data based on the application information and the scenario trigger information. If there is a matching auxiliary service and the scenario status indicates that the application is running in foreground, it is determined to push the auxiliary service. Otherwise, if there is no matching auxiliary service or the scenario status indicates that the application exits the foreground, it is determined not to push the auxiliary service.

S923: When determining to push the auxiliary service, the multimode decision engine displays a push window, and launches the auxiliary service.

For example, with reference to FIG. 2B, when the multimode decision engine determines to push the auxiliary service, the push window 02 is displayed, and the "Visual & Voice Interaction" auxiliary service is launched. In this way, the user can control, by using a voice, the video being played.

It should be noted that in this embodiment of this application, descriptions are provided by using an example in which when it is determined to push the auxiliary service, the auxiliary service is directly launched. In another example, when it is determined to push the auxiliary service, the push window may be first displayed. When the user triggers a confirmation operation based on the push window, the multimode decision engine launches the auxiliary service. For details, refer to the application scenario in FIG. 6A, FIG. 6B, and FIG. 6C.

In addition, it should be noted that in this embodiment of this application, descriptions are provided by using an example in which the scenario subscription condition is met. In another example, if the scenario subscription condition is not met, the multimode decision engine does not subscribe to a scenario fence from the decision middle platform.

In this embodiment of this application, parameter information of auxiliary services supported by the electronic device is obtained, where the parameter includes an application list and scenario trigger information, and the application list includes application information of an installed application supported by the auxiliary service; a scenario detection capability supported by the electronic device is queried; and then a target scenario fence is subscribed to based on the parameter information of the auxiliary services and the scenario detection capability supported by the electronic device, so that the electronic device pushes a corresponding auxiliary service when detecting, based on the target scenario fence, that an auxiliary service trigger condition is met, where the target scenario fence includes a scenario fence of at least one auxiliary service. In this way, the parameter information of the auxiliary services and the scenario detection capability supported by the electronic device are merged, to determine an auxiliary service that is finally allowed to be provided by the electronic device, and a corresponding scenario fence is subscribed to based on the determined auxiliary service that is allowed to be provided, to accurately push the auxiliary service to the user when it is detected that the scenario fence is triggered.

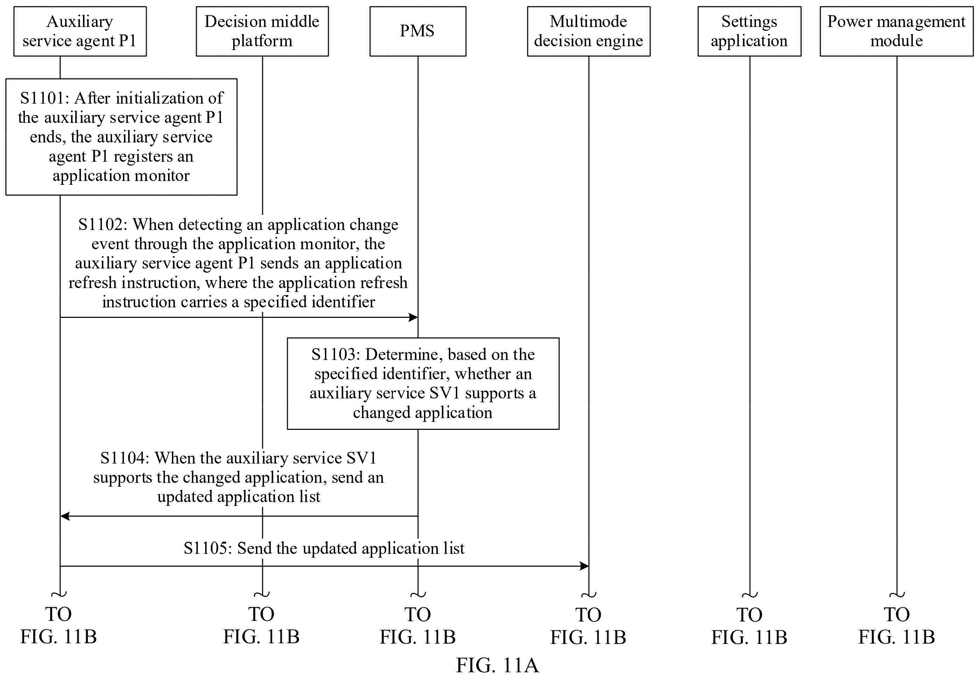

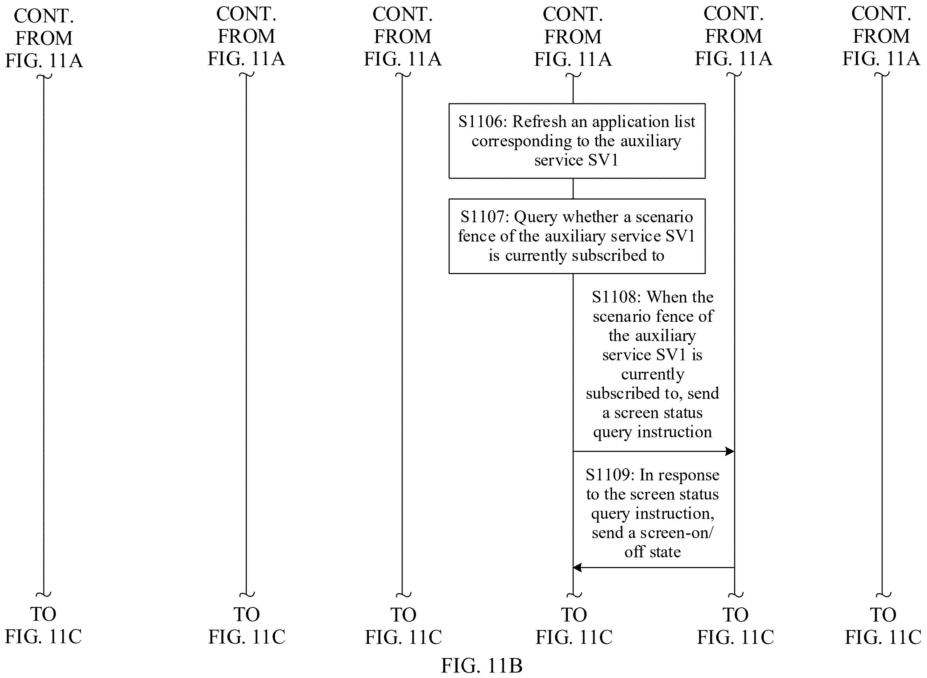

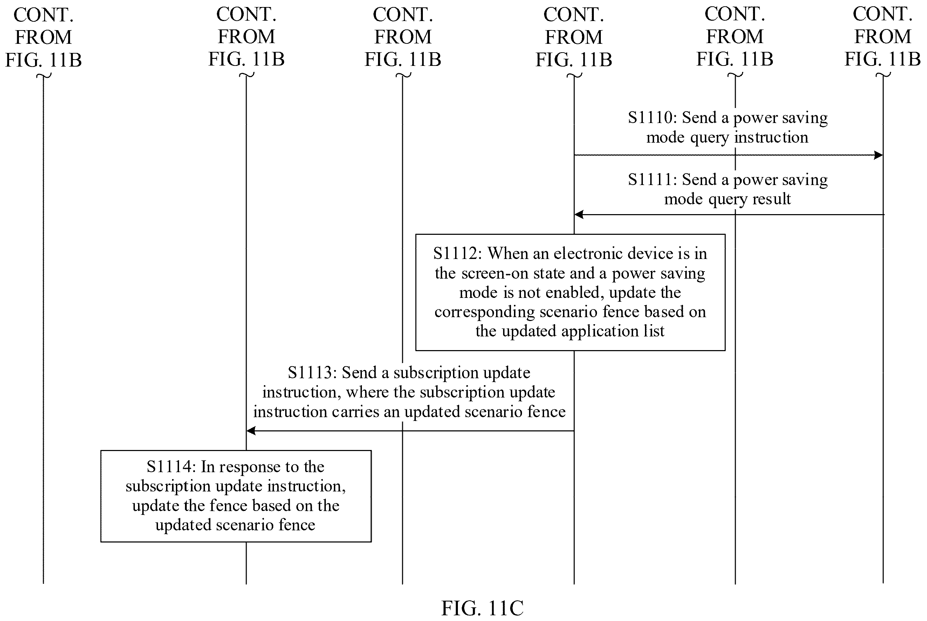

In a process of using the electronic device, the parameter information of the auxiliary service may be changed, for example, the application list may be changed. In this case, to accurately push the auxiliary service, the application list corresponding to the auxiliary service and the scenario fence may be refreshed based on update detection logic. Specifically, with reference to FIG. 11A, FIG. 11B, and FIG. 11C, FIG. 11A, FIG. 11B, and FIG. 11C are a schematic flowchart of a method for refreshing a scenario fence according to an example embodiment. The method may be performed by the electronic device shown in FIG. 8. The electronic device is implemented through interaction of a plurality of modules. The method may include all or some of the following content.

S1101: After initialization of an auxiliary service agent P1 ends, the auxiliary service agent P1 registers an application monitor.

The application monitor is configured to monitor application uninstallation broadcast and application installation broadcast. That is, after initialization of the auxiliary service agent P1 ends, the application monitor is registered to monitor whether an application change event occurs in the electronic device, for example, an event of uninstalling an application or an event of installing an application.

It should be noted that in this embodiment of this application, the auxiliary service agent P1 is used as an example for description. When a multimode decision engine includes a plurality of auxiliary service agents, each of the plurality of auxiliary service agents may perform a same or similar operation.

S1102: When detecting the application change event through the application monitor, the auxiliary service agent P1 sends an application refresh instruction to a PMS, where the application refresh instruction carries a specified identifier.

In a case, when a user installs a new application on the electronic device, the application change event occurs. In another case, when the user uninstalls an application installed on the electronic device, the application change event occurs. When the application change event occurs, the auxiliary service agent P1 may detect the event through the application monitor. A changed application may be related to an auxiliary service SV1. Therefore, for further determining, the auxiliary service agent P1 sends the application refresh instruction to the PMS, and includes the specified identifier in the application refresh instruction.

S1103: The PMS determines, based on the specified identifier, whether the auxiliary service SV1 supports the changed application.

As described above, if an application package of an application includes the specified identifier, it indicates that the auxiliary service SV1 supports the application; or if the application package of the application does not include the specified identifier, it indicates that the auxiliary service SV1 does not support the application. Therefore, the PMS may detect whether an application package of the changed application includes the specified identifier, to determine whether the changed application is related to the auxiliary service SV1, that is, determine whether the auxiliary service SV1 supports the changed application.

S1104: When the auxiliary service SV1 supports the changed application, the PMS sends an updated application list to the auxiliary service agent P1.

For example, if the application change event is application uninstallation, the PMS deletes application information of the changed application from an application list corresponding to the specified identifier, to obtain the updated application list. If the application change event is application installation, the PMS adds application information of the changed application to an application list corresponding to the specified identifier, to obtain the updated application list. Then, the PMS sends the updated application list to the auxiliary service agent P1.

S1105: The auxiliary service agent P1 sends the updated application list to the multimode decision engine.

S1106: The multimode decision engine refreshes an application list corresponding to the auxiliary service SV1.

That is, the multimode decision engine refreshes the stored application list corresponding to the auxiliary service SV1 to the updated application list.

S1107: The multimode decision engine queries whether a scenario fence of the auxiliary service SV1 is currently subscribed to.

The multimode decision engine self-checks whether the scenario fence of the auxiliary service SV1 is currently subscribed to. In an example of this application, when the scenario fence of the auxiliary service SV1 is subscribed to, the multimode decision engine may record the subscription event. In this way, the multimode decision engine may self-check, by querying whether this record is present, whether the scenario fence of the auxiliary service SV1 is subscribed to.

S1108: When the scenario fence of the auxiliary service SV1 is currently subscribed to, the multimode decision engine sends a screen status query instruction to a power management module.

The screen status query instruction is used to query a screen status of the electronic device, and the screen status includes a screen-on state or a screen-off state.

S1109: In response to the screen status query instruction, the power management module sends the screen-on/off state to the multimode engine module.

It should be noted that in this embodiment of this application, descriptions are provided by using an example in which the multimode decision engine sends the screen status query instruction to the power management module to query the screen status. In another example, the multimode decision engine may monitor the screen status through a screen-on/off monitor.

S1110: The multimode decision engine sends a power saving mode query instruction to a Settings application.

The power saving mode query instruction is used to query whether the electronic device currently enables a power saving mode.

S1111: The Settings application sends a power saving mode query result to the multimode decision engine.

It should be noted that in this embodiment of this application, descriptions are provided by using an example in which the multimode decision engine sends the power saving mode query instruction to the Settings application to query whether the power saving mode is enabled. In another example, the multimode decision engine may monitor, through a power saving mode monitor, whether the power saving mode is enabled.

It should be noted that there is no strict execution sequence between the operation of querying the screen-on/off state by the multimode decision engine and the operation of detecting a power saving mode status. In an example, the two operations may be performed in parallel. In addition, the two operations are optional.

S1112: When the electronic device is in the screen-on state and the power saving mode is not enabled, the multimode decision engine updates the corresponding scenario fence based on the updated application list.

In an example of this application, if the electronic device is in the screen-on state and the power saving mode is not enabled, it is determined that a scenario subscription condition is met. In this case, the multimode decision engine replaces the application list of the scenario fence of the auxiliary service SV1 with the updated application list, to obtain an updated scenario fence.

S1113: The multimode decision engine sends a subscription update instruction to a decision middle platform, where the subscription update instruction carries the updated scenario fence.

S1114: In response to the subscription update instruction, the decision middle platform updates the fence based on the updated scenario fence.

In this way, when the application change event occurs and the updated application is related to the auxiliary service SV1, the multimode decision engine refreshes the application list corresponding to the auxiliary service SV1 based on the update detection logic, and refreshes the scenario fence of the auxiliary service SV1 based on the updated application list, so that the auxiliary service SV1 can be accurately pushed to the user when the scenario fence is triggered.

It should be noted that descriptions are provided above by using an example in which the multimode decision engine determines, through self-check, that the scenario fence of the auxiliary service SV1 is currently subscribed to. In another possible case, if the multimode decision engine determines, through self-check, that the scenario fence of the auxiliary service SV1 is currently not subscribed to, the scenario fence of the auxiliary service SV1 may not be refreshed.

It should be noted that in this embodiment of this application, descriptions are provided by using an example in which the auxiliary service SV1 supports the changed application. In another case, if the auxiliary service SV1 does not support the changed application, it indicates that the application list does not need to be updated. In this case, the PMS may send a no-change notification to the auxiliary service agent P1, so that the auxiliary service agent P1 learns that the application change event is not related to the auxiliary service SV1. In this case, the scenario fence may not be refreshed.

It should be noted that in this embodiment of this application, descriptions are provided by using an example in which the scenario fence needs to be refreshed when there is the application change. In an example, a change in statuses of some switches in the electronic device also affects refresh of the scenario fence. For example, in some scenarios, a specific barrier scenario may no longer needs to be detected. In this case, the multimode decision engine further needs to cancel subscription from the decision middle platform. In an example of this application, an event in which a subscription status needs to be updated may include but is not limited to the following several events: 1. A switch of a basic service is enabled or disabled. 2. Screen-on/off broadcast is received. 3. The power saving mode of the electronic device is enabled or disabled. 4. Parameter information of the auxiliary service is changed, for example, the application change event occurs. 5. A switch of a status bar capsule is enabled or disabled. 6. An auxiliary service global switch is enabled or disabled.

For example, the multimode decision engine registers a first switch monitor, a second switch monitor, and a third switch monitor during initialization. If the multimode decision engine detects, through at least one of the plurality of switch monitors, that a corresponding switch is in a disabled state, the multimode decision engine cancels subscription to a related scenario fence from the decision middle platform, to save system resources. When detecting that the switch is switched to an enabled state, the multimode decision engine may re-subscribe to the canceled scenario fence from the decision middle platform. For example, when detecting, through the first switch monitor, that the switch of the basic service is disabled, the multimode decision engine indicates the decision middle platform to cancel all subscribed scenario fences. Correspondingly, the decision middle platform may delete all the subscribed scenario fences, and deregister a sensing fence registered with a sensing module, that is, no longer perform scenario detection or another operation, thereby further reducing running power consumption of the electronic device.

In this embodiment of this application, when an event related to a subscribed auxiliary service occurs, the electronic device refreshes a subscribed scenario fence or cancels subscription to a scenario fence, so that the auxiliary service can be accurately pushed. In addition, when the auxiliary service does not need to be pushed, subscription to the scenario fence is canceled, so that the electronic device no longer performs scenario detection, thereby reducing running power consumption of the electronic device.

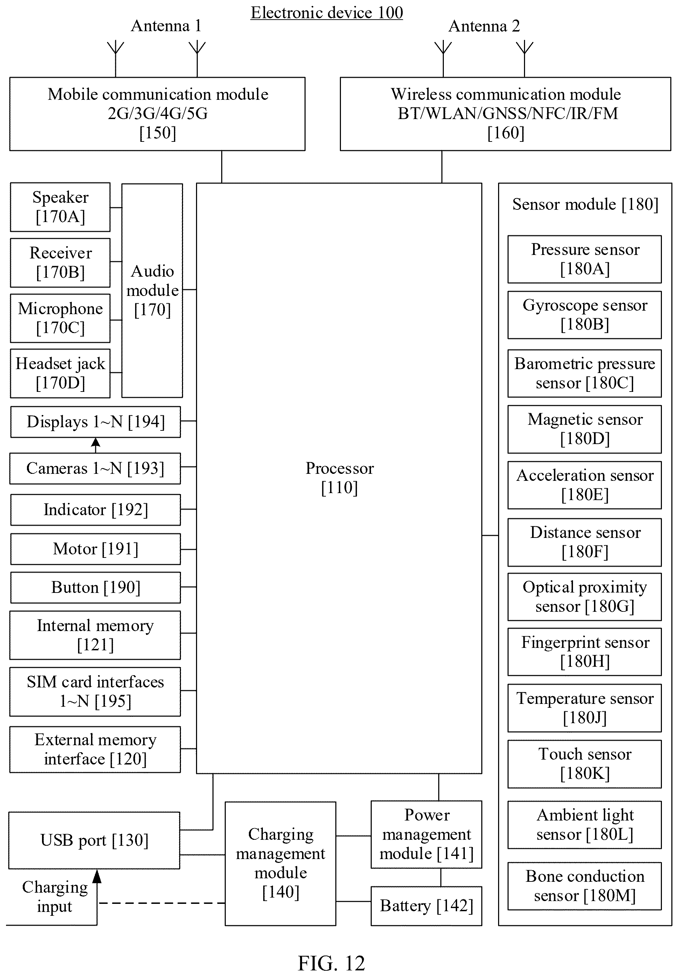

FIG. 12 is a schematic diagram of a structure of an electronic device according to an embodiment of this application. With reference to FIG. 12, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) port.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that perform program instructions to generate or change display information.

The display 194 is configured to display an image, a video, and the like. The display 194 includes a display panel.

The electronic device 100 may implement a photographing function through the ISP, the camera 193, the video codec, the GPU, the display 194, the application processor, and the like.

The external memory interface 120 may be configured to be connected to an external memory card such as a Micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the computer-executable program code includes instructions. The processor 110 performs various functional applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book), and the like created when the electronic device 100 is used. In addition, the internal memory 121 may include a high-speed random access memory, and may further include a non-volatile memory, for example, at least one magnetic disk storage device, a flash storage device, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The gyroscope sensor 180B may be configured to determine a motion posture of the electronic device 100. In some embodiments, angular velocities of the electronic device 100 around three axes (namely, x, y, and z axes) may be determined through the gyroscope sensor 180B. The gyroscope sensor 180B may be configured to implement image stabilization during photographing. For example, when a shutter is pressed, the gyroscope sensor 180B detects a jittering angle of the electronic device 100, calculates, based on the angle, a distance for which a lens module needs to compensate, and enables a lens to offset jittering of the electronic device 100 through reverse motion, to implement image stabilization. The gyroscope sensor 180B may be further used in a navigation scenario and a motion-sensing game scenario.

The acceleration sensor 180E may detect acceleration of the electronic device 100 in various directions (usually on three axes), and may detect a magnitude and a direction of gravity when the electronic device 100 is stationary. The acceleration sensor 180E may be further configured to identify a posture of the electronic device 100, and is applied to applications such as switching between a landscape mode and a portrait mode and a pedometer.

The button 190 includes a power button, a volume button, or the like. The button 190 may be a mechanical button, or may be a touch button. The electronic device 100 may receive a button input, and generate a button signal input related to a user setting and function control of the electronic device 100.

All or some of the foregoing embodiments may be implemented by software, hardware, firmware, or any combination thereof. When software is used for implementation, all or some of the foregoing embodiments may be implemented in a form of a computer program product. The computer program product includes one or more computer instructions. When the computer instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by the computer, or a data storage device, for example, a server or a data center, into which one or more usable media are integrated. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

## Claims

1. A service push method, applied to an electronic device, wherein the method comprises:
obtaining parameter information of auxiliary services supported by the electronic device, wherein parameter information of an auxiliary service comprises an application list and scenario trigger information, and the application list comprises application information of an application that is supported by the auxiliary service and that is installed on the electronic device;
querying a scenario detection capability supported by the electronic device; and
subscribing to a target scenario fence based on the parameter information of the auxiliary services and the scenario detection capability supported by the electronic device, so that the electronic device pushes a corresponding auxiliary service when detecting, based on the target scenario fence, that an auxiliary service trigger condition is met.

2. The method according to claim 1, wherein the obtaining parameter information of auxiliary services supported by the electronic device comprises:
querying, for any one of the auxiliary services, an application package comprising a specified identifier from application packages of all applications installed on the electronic device, wherein the any auxiliary service supports an application corresponding to the application package comprising the specified identifier;
adding application information corresponding to each of all found application packages to an application list corresponding to the any auxiliary service;
obtaining scenario trigger information of the any auxiliary service, wherein different scenario trigger information corresponds to different specified identifiers; and
obtaining the application list obtained after addition and the scenario trigger information of the any auxiliary service as parameter information of the any auxiliary service.

3. The method according to claim 2, wherein before the querying, for any one of the auxiliary services, an application package comprising a specified identifier from application packages of all applications installed on the electronic device, the method further comprises:
for the any one of the auxiliary services, querying whether a hardware condition and/or a software condition related to functional implementation of the any auxiliary service meet/meets a preset service support condition; and
the querying an application package comprising a specified identifier from application packages of all applications installed on the electronic device comprises:
when the hardware condition and/or the software condition related to the functional implementation of the any auxiliary service meet/meets the preset service support condition, performing the operation of querying an application package comprising a specified identifier from application packages of all applications installed on the electronic device.

4. The method according to any one of claims 1-3, wherein the subscribing to a target scenario fence based on the parameter information of the auxiliary services and the scenario detection capability supported by the electronic device comprises:
for the any one of the auxiliary services, determining whether the scenario detection capability of the electronic device comprises a scenario detection capability indicated by the scenario trigger information in the parameter information of the any auxiliary service; and
subscribing to a scenario fence of the any auxiliary service when the scenario detection capability of the electronic device comprises the scenario detection capability indicated by the scenario trigger information in the parameter information of the any auxiliary service.

5. The method according to claim 4, wherein the scenario fence of the any auxiliary service comprises a mapping relationship between the scenario trigger information and the application list of the any auxiliary service.

6. The method according to any one of claims 1-5, wherein before the subscribing to a target scenario fence based on the parameter information of the auxiliary services and the scenario detection capability supported by the electronic device, the method further comprises:
detecting a screen-on/off state and a power saving mode status of the electronic device; and
the subscribing to a target scenario fence based on the parameter information of the auxiliary services and the scenario detection capability supported by the electronic device comprises:
when the electronic device is in the screen-on state and a power saving mode of the electronic device is in a disabled state, performing the operation of subscribing to a target scenario fence based on the parameter information of the auxiliary services and the scenario detection capability supported by the electronic device.

7. The method according to any one of claims 1-6, wherein after the subscribing to a target scenario fence based on the parameter information of the auxiliary services and the scenario detection capability supported by the electronic device, the method further comprises:
if the electronic device enters the screen-off state or the power saving mode of the electronic device is in an enabled state, canceling the subscription to the target scenario fence.

8. The method according to any one of claims 1-7, wherein after the subscribing to a target scenario fence based on the parameter information of the auxiliary services and the scenario detection capability supported by the electronic device, the method further comprises:
if an application change event occurs in the electronic device, querying whether the auxiliary services comprise a target auxiliary service, wherein the target auxiliary service is an auxiliary service of a target application that supports a change, and the application change event is an event of installing an application or uninstalling an application; and
if the auxiliary services comprise the target auxiliary service and a scenario fence corresponding to the target auxiliary service is subscribed to, updating the scenario fence corresponding to the target auxiliary service, so that application information of the target application is removed from or added to an updated scenario fence.

9. The method according to any one of claims 1-8, wherein the electronic device comprises a multimode decision engine, a decision middle platform, and an application package manager service, and the multimode decision engine comprises auxiliary service agents corresponding to the auxiliary services;
the obtaining parameter information of auxiliary services supported by the electronic device comprises:
respectively obtaining, by the multimode decision engine, the parameter information of the auxiliary services from the application package manager service through the auxiliary service agents;
the querying a scenario detection capability supported by the electronic device comprises:
querying, by the multimode decision engine, the scenario detection capability supported by the electronic device from the decision middle platform; and
the subscribing to a target scenario fence based on the parameter information of the auxiliary services and the scenario detection capability supported by the electronic device comprises:
subscribing, by the multimode decision engine, to the target scenario fence from the decision middle platform based on the parameter information of the auxiliary services and the scenario detection capability supported by the electronic device.

10. The method according to any one of claims 1-9, wherein the target scenario fence comprises at least one scenario fence, and different scenario fences correspond to different auxiliary services; and
after the subscribing to a target scenario fence based on the parameter information of the auxiliary services and the scenario detection capability supported by the electronic device, the method further comprises:
in response to a scenario in which the electronic device is located being a barrier scenario indicated by scenario trigger information in a first scenario fence, querying whether an application list in the first scenario fence comprises an application that is running in the foreground, wherein the first scenario fence is a scenario fence in the target scenario fence; and
if the application list in the first scenario fence comprises an application that is running in the foreground, pushing an auxiliary service corresponding to the first scenario fence.

11. An electronic device, wherein the electronic device comprises a memory, a processor, and a computer program that is stored in the memory and that is capable of running on the processor, and when the processor executes the computer program, the method according to any one of claims 1-10 is implemented.

12. A computer-readable storage medium, wherein the computer-readable storage medium stores instructions, and when the instructions are run on a computer, the computer is enabled to perform the method according to any one of claims 1-10.
